(19) Europäisches Patentamt / European Patent Office / Office européen des brevets

(11) **EP 4 572 222 B1**

(12) **EUROPEAN PATENT SPECIFICATION**

(45) Date of publication and mention
of the grant of the patent:
**27.05.2026 Bulletin 2026/22**

(21) Application number: **23307230.5**

(22) Date of filing: **15.12.2023**

(51) International Patent Classification (IPC):
*H04L 9/00* *(2022.01)*

(52) Cooperative Patent Classification (CPC):
**H04L 9/003;** H04L 2209/046; H04L 2209/34

(54) **A PROCESSING SYSTEM AND METHOD USING A TWEAKABLE CODE-BASED MASKING**

VERARBEITUNGSSYSTEM UND VERFAHREN MIT VERWENDUNG EINER OPTIMIERBAREN CODEBASIERTEN MASKIERUNG

SYSTÈME ET PROCÉDÉ DE TRAITEMENT UTILISANT UN MASQUAGE À BASE DE CODE MODIFIABLE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**18.06.2025 Bulletin 2025/25**

(73) Proprietor: **Secure-IC SAS**
**35510 Cesson-Sévigné (FR)**

(72) Inventors:
• **CHENG, Wei**
**91300 MASSY (FR)**
• **GUILLEY, Sylvain**
**75013 PARIS (FR)**

(74) Representative: **Atout PI Laplace**
**Immeuble Up On**
**25 Boulevard Romain Rolland**
**CS 40072**
**75685 Paris Cedex 14 (FR)**

(56) References cited:
CN-A- 106 911 461      CN-A- 114 048 472
US-A1- 2023 224 285

• **WANG WEIJIA ET AL: "Provable Order Amplification for Code-Based Masking: How to Avoid Non-Linear Leakages Due to Masked Operations", IEEE TRANSACTIONS ON INFORMATION FORENSICS AND SECURITY, IEEE, USA, vol. 14, no. 11, 1 November 2019 (2019-11-01), pages 3069 - 3082, XP011733099, ISSN: 1556-6013, [retrieved on 20190701], DOI: 10.1109/TIFS.2019.2912549**

## Description

The invention generally relates to the protection of processing devices and, in particular, to a processing system configured to protect the execution of a processing function.

## BACKGROUND

As part of huge endeavors to enhance the security of processing systems, such as including smartcards, mobile devices, smart IoT devices, etc., secure implementations are required to be compliant to international/national standards before being deployed on the market.

A processing system such as a cryptographic system can implement a processing function applied to an input information word, such as in the AES cryptographic algorithm for example which apply an AES function to an input information word.

In order to implement a processing function, several elementary operations are generally executed such as additions and multiplications.

However, the elementary operations performed to execute a processing function must be secured against non-invasive attacks that attempt to correlate the leakage of some operations with a hypothetical model.

Non-invasive attacks can use power consumption, electromagnetic (EM) radiation, and timing measurements to extract information. The measurement techniques rely on the data-dependent internal behavior of the underlying system. Exemplary non-invasive attacks include power analysis attacks. Power analysis can be used to identify the specific portions of the program being executed to induce timing glitches that may be used to bypass key checking.

A known solution to protect arithmetic operations against such attacks threat is masking as described in Stefan Mangard, Elisabeth Oswald, and Thomas Popp. Power Analysis Attacks: Revealing the Secrets of Smart Cards. Springer, December 2006. ISBN 0-387-30857-1. "Masking" refers to a change of intermediate variables of the computation into randomized versions which are thus decorrelated from the unprotected variables, each being a potential target for a side-channel attack.

In particular, the mainstream approach consists in using purely Boolean Masking (BM). This is the case of widely used and standardized ciphers, such as DES (Data Encryption Standard) and AES (Advanced Encryption Standard). In both DES and AES examples, most cryptographic operations (except from simple data move, which does not leak by itself) are implemented using XORs and in look-up-tables (LUTs). Boolean masking (BM) shall be configured to achieve higher-order protections. However, the Boolean masking has merely no protection when the noise level is low, and the usual transitional leakages can downgrade the protection.

Another approach to perform masking is called inner product masking (IPM). IPM shall reduce or even prevent transitional leakages. However, such approach also suffers from noise level dependence. More generally, IPM can be further enhanced by utilising better linear codes, and extended to other masking schemes.

Besides, the processing system can also be victim of physical perturbations, which can lead to a corruption of the result. Such malfunction is harmful to both the processing system safety and cybersecurity. Indeed, from a safety point of view, incorrect results likely yield unspecified behaviours, with severe impacts unless detected. From a cybersecurity point of view, attacks can result in exploitation paths leading to cryptanalysis. Detection is one technique to protect against this devastating consequence. However, usually, detection is hard to build into the processing system, and can also be contradictory with the passive side-channel protections.

Chinese patent application publication document CN 114048472 A1 discloses a method for encrypting a McEliece public key mask with a light weight and a small size.

There is consequently a need for improved systems, methods, and computer program products for improving the protection of a processing function implemented by a processing system against non-invasive attacks.

## SUMMARY

To address these and other problems, there is provided a processing system (1) configured to execute a processing function $f(x)$ in response to the receipt of an input information word $x$ comprising $k$ information symbols, the processing system comprising a protection device configured to protect the execution of the processing function. The processing system comprises a processing unit configured to execute the processing function, the processing unit being configured to decompose the processing function $f$ into one or more basis operations comprising one or more elementary operations between two operands, the elementary operations comprising at least a component-wise multiplication operation. The processing unit comprises a multiplier configured to perform the multiplication operation, and the protection device comprises at least:

- an encoding matrix determination unit configured to randomly determine an information code $C$ and a masking code $D$

being linear codes, the information code and the masking code satisfying one or more predefined code properties, and to determine the encoding matrix $A$ from the information code and the masking code, the encoding matrix $A$ being determined by vertically stacking the vectors of the information code and of the masking code;

- an encoder configured to apply an encoding operation to an encoder input comprising information symbols, the encoding operation consisting in encoding the encoder input using the encoding matrix $A$, which provides an encoded word corresponding to the encoder input.

The processing device is configured to apply the encoder to the input information word $x$, and to each operand of an elementary operation, each elementary operation being applied to the encoded words determined by the encoder for each operand,

The multiplication operation performed by the multiplier is further masked using the pseudo-inverse matrix $A^{-1}$ of the encoding matrix $A$, and the pseudo-inverse transpose matrix $A^{-T}$ of the encoding matrix $A$, such that $(A^T)^{-1} = (A^{-1})^T$. In some embodiments, the encoding matrix $A$ may be applied by the encoder to pad $k$ information symbols of an encoder input with m random numbers, the output of the encoder being a masked vector $\hat{x}$ of length $n$, with $n \geq k + m$, the masked vector $\hat{x}$ belonging to $\mathbb{F}^n$, the encoding matrix $A$ being an $(k + m) \times n$ matrix in the field $\mathbb{F}$.

In some aspects, in response to the receipt of an encoder input X, the encoder is configured to determine random masks $M_X \in \mathbb{F}^m$ and an error indicator $\epsilon_X \in \mathbb{F}^e$ in association with the encoder input $X$, and to encode the encoder input using the encoding matrix A, the random masks $M_X$ and the error indicator $\varepsilon_X$.

In some embodiments, the encoder output $\hat{X}$ may be determined as :

$$\hat{X} = (X, M_X, \epsilon_X)A$$

The encoding matrix belongs to $\mathbb{F}^{n' \times n}$ and $n' = k + m + e$.

In some aspects, in response to the receipt of two inputs $\hat{X}$ and $\hat{Y}$ masked by the encoder , the multiplier may be configured to :

- determine the cross-product W of the masked vectors and of the random matrix as $W = \hat{X}^T\hat{Y}$;

- apply a flatten function to $A^{-T}W$ which provides a flattened matrix $T$ defined as $T = flatten(A^{-T}W)$, where $A^{-T}$ is the pseudo-inverse transpose matrix of the encoding matrix $A$;

- determine the result of the multiplication $\hat{Z}$ by performing the product of the flattened matrix $T$ and of the matrix $\hat{S}$ such that $\hat{Z} = T\hat{S}$.

In response to the receipt of two inputs $\hat{X}$ and $\hat{Y}$ masked by the encoder, the multiplier may be configured to:

- determine a random seed $sd$ uniformly in $\mathbb{F}^{n^2 - n'}$ ;

- determine , a random matrix $\hat{R}$ from the random seed;

- determine the sum W of the cross-product of the masked vectors and of the random matrix as $= \hat{X}^T\hat{Y} + R$;

- apply a flatten function to $A^{-T}W$ which provides a flattened matrix $T$ defined as $T = flatten(A^{-T}W)$, where $A^{-T}$ is the pseudo-inverse transpose matrix of the encoding matrix $A$ ;

- determine the result of the multiplication $\hat{Z}$ by performing the product of the flattened matrix $T$ and of the matrix $\hat{S}$ such that $\hat{Z} = T\hat{S}$.

In some aspects, the elementary operations may further comprise a component-wise addition operation and the processing device may comprise an adder configured to perform the addition operation using inputs previously encoded by the encoder.

In some aspects, the protection device may further comprise a decoder configured to apply a decoding operation to word $\hat{X}$ previously encoded by the encoder, the decoder being configured to provide a decoder output comprising original data X, using the encoded word $\hat{X}$ and the pseudo-inverse matrix $A^{-1}$ of the encoder matrix $A$.

The decoder output may further comprise random masks $\mathbf{M_X} \in \mathbb{F}^m$ and an error indicator $\epsilon_X \in \mathbb{F}^e$ in association with the output original data X, and the decoding operation $DEC_{msk}$ applied by the decoder may be defined by:

$$DEC_{msk}(\hat{X}) = \hat{X}A^{-1} = (X, \boldsymbol{M_X}, \epsilon_X)$$

In some aspects, the protection device may further comprise a refreshing unit configured to perform a refreshing operation, at one or more instant times during the execution of the processing function, the refreshing operation consisting in determining a refreshed encoded word $\hat{X}'$ for an encoder input word X previously applied to the decoder to determine encoded word $\hat{X}$ such that both encoded word $\hat{X}$ and the refreshed encoded word X' correspond to the same input information word X, the refreshing unit being configured to replace the encoded word $\hat{X}$ by the refreshed encoded word $\hat{X}'$.

In some aspects, the protection device may further comprise a checking unit configured to perform a checking operation consisting in checking if a computing error occurred in the operations performed by the encoder, the adder, or the multiplier.

The checking unit may be configured to check whether the error indicator variable $\varepsilon_X$ associated with the word X meets the condition $\varepsilon_X$ = cst where cst is a predefined constant, and to detect whether an error occurred from the condition.

Wherein no error is detected if $\varepsilon_X$ = cst, and if the error indicator variable $\varepsilon_X$ is different from the predefined constant cst, the checking unit may be configured to further apply a syndrome decoding technique using syndromes of linear codes to determine if an error occurred.

In some aspects, the masking code may have the largest possible dual distance, in the finite field of interest for the application to satisfy a security code criteria and/or the masking code may be sparse or structured to satisfy a performance power area (PPA) code criteria.

In some aspects, the information code and the random code, used to generate the encoding matrix $\boldsymbol{A}$, have no intersection of non-zero codewords.

In one embodiment, the encoding matrix A may be generated from a Vandermonde matrix.

There is also provided a method, implemented in a processing system, for executing a processing function $f(x)$ in response to the receipt of an input information word x comprising k information symbols, the method comprising protecting the execution of the processing function. The execution of the processing function comprises decomposing the processing function $f$ into one or more basis operations comprising one or more elementary operations between two operands, the elementary operations comprising at least a multiplication operation, the multiplication being a component-wise multiplication, the processing function execution step comprising:

- randomly determining an information code and a masking code, being linear codes, the information code and the masking code satisfying one or more predefined code properties,

- determining an encoding matrix $\boldsymbol{A}$ from the information code and the masking code, the matrix A being determined by vertically stacking the vectors of the information code and of the masking code;

- applying an encoding operation to the input information word x, and to each operand of an elementary operation, prior the execution of the elementary operation, the encoding operation consisting in encoding the input received in the encoding step using the encoding matrix $\boldsymbol{A}$;

- executing the one or more elementary operations by applying the elementary operations to the operands encoded in the encoding step;

wherein the multiplication operation is further masked using the pseudo-inverse matrix $\mathbf{A}^{-1}$ of the encoding matrix $\mathbf{A}$, and the pseudo-inverse transpose matrix $\mathbf{A}^{-T}$ of the encoding matrix $\mathbf{A}$.

## BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

- Figure 1 depicts a processing system, in accordance with embodiments of the invention;

- Figure 2 is a detailed view of the protected system, according to some embodiments;

- Figure 3 is a flowchart depicting a masked encoding method, according to some embodiments of the invention.

- Figure 4 is a flowchart depicting a masked multiplication method, according to some embodiments of the invention.

- Figure 5 is a flowchart depicting a masked multiplication method using internal randomness, according to some embodiments of the invention.

- Figure 6 is a flowchart depicting the method implemented by the checking unit to detect errors, according to some embodiments of the invention.

- Figure 7 is a flowchart depicting the method of executing a processing function, according to some embodiments of the invention.

**DETAILED DESCRIPTION**

Embodiments of the invention provide a processing system and a method that protects a processing function implemented by the processing system using an improved masking scheme.

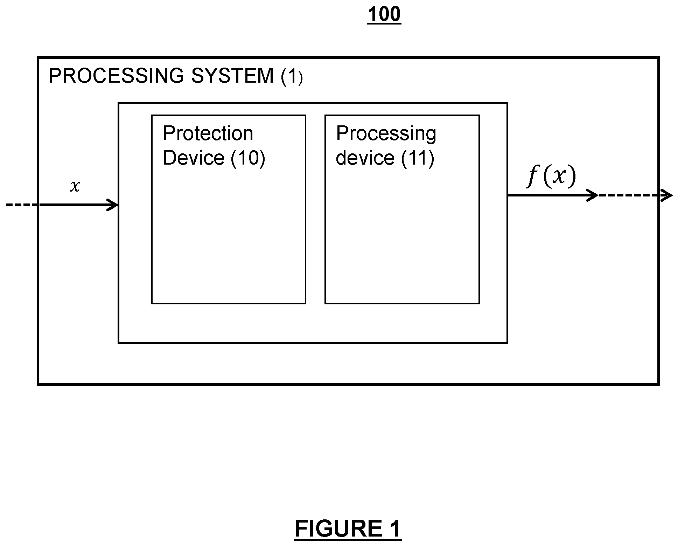

Referring to Figure 1, an operating environment in accordance with embodiments of the invention is shown. The operating environment includes a processing system 1 according to embodiments of the invention. The processing system 1 is configured to execute a processing function $f$ on an input information word $X$ comprising $k$ information symbols (the input information word can be also denoted $X_{in}$).

The processing function f may be any function that is executed by a processing system 1 that can be decomposed into elementary operations including one or more additions and/or multiplications, and possibly additional operations. The processing function may be for example a cryptographic function (e.g. AES or SM4 function), an inference function, a statistics function on input data, a mean function, or a variance function, etc.

Indeed, these two elementary operations (addition and multiplication) are universal in that any digital computation involved in a processing performed by a processing system 1 can be achieved by interleaving them. They amount to evaluate arbitrary polynomials, which interpolate the processing function. More additional operations can be added, such as scaling (i.e., multiplication by a constant), exponentiation (i.e., iterated multiplications), etc. The decomposition of a processing function into basis operations (elementary operations and additional operation) may be determined so as to optimize performances.

The processing system 1 may be any information processing system, device, chip or circuit executing a processing function such as for example and without limitation a smartcard, a mobile device, a smart IoT device, or a crypto system. The following description of some embodiments of the invention will be mainly made with reference to a crypto system for illustration purpose only.

The processing system 1 comprises a protection device 10 configured to protect the execution of the processing function by applying an improved masking scheme, referred to hereinafter as a tweakable code-based masking (TCBM) scheme, against non-invasive physically attacks, such as side-channel attacks, and against (semi-) invasive attacks such as fault injection attacks, simultaneously under proper configurations.

Advantageously, the masking scheme depends on an encoded matrix $A$ that is generated using at least two linear codes comprising an information code $C$ and a masking code $D$ without non-zero codeword in their intersection (i.e. the information code $C$ and the random code $D$, used to generate the encoding matrix $A$, have no intersection of non-zero codewords). The masking scheme uses these two linear codes to determine a random sharing of a key-dependent sensitive variable by confusing the information words with random words. The random words may be generated by an in-chip true random number generators (TRNG), or input directly to the protection device 10.

The processing system 1 comprises a processing device 11 configured to execute the processing function, the processing device being configured to decompose the processing function $f$ into one or more basis operations comprising one or more elementary operations, and possibly one or more additional operations.

An additional operation may be for example and without limitations an operation among a scaling operation (such as a multiplication with a constant), an exponentiation (such as a self-multiplication performed a given number of times), an inverse operation, etc.

As used herein, an elementary operation refers to an addition operation or a multiplication operation. The addition operation and the multiplication operation are component-wise operations.

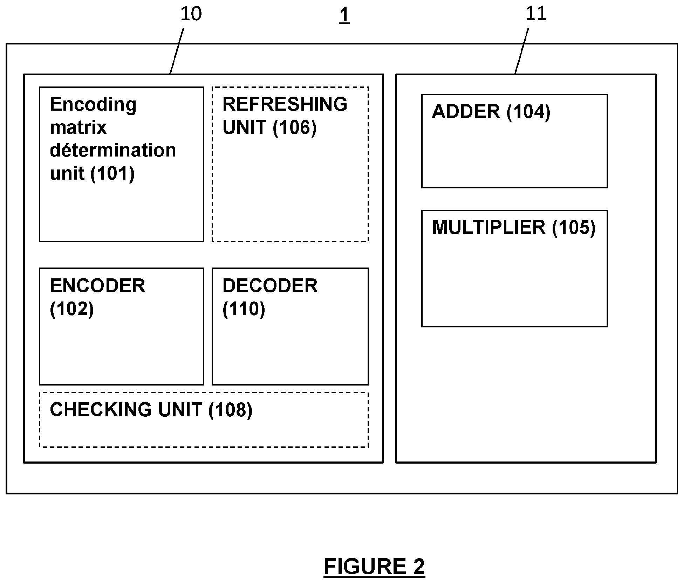

Figure 2 represents the detailed structure of the processing system 1, according to some embodiments.

As shown in figure 2, the processing device 11 may comprise an adder 104 configured to perform an addition operation, and a multiplier 105 configured to perform a multiplication operation.

The protection device 10 may comprise an encoding matrix determination unit 101 configured to randomly determine the information code C and the masking linear codes D. The information code C and the masking code D satisfy predefined code property. The encoding matrix determination unit 101 is further configured to determine the encoding matrix A from the linear codes C and D.

Each of the information code C and the masking code D may be represented by a vector structure comprising a set of vectors. The matrix A is determined by stacking vertically vectors of information code C and of the masking code D.

The protection device 10 further comprises an encoder 102 configured to apply an encoding operation to the original input information word $X$ and to each input (operand) of the elementary operations (addition, multiplication), the encoding operation consisting in encoding the received input using an encoding technique, which provides an encoded information word. Advantageously, the encoded operation applied by the encoder 102 is masked with the encoding matrix $A$. The encoding matrix $A$ used by the encoder may subsequently remain the same for the execution of a series of elementary operations (additions, and multiplications) into which the processing function is decomposed. In particular, the encoding matrix A shall remain consistent end to end until the computation of the processing function is terminated, at which point the decoder 110 can be called. It should be noted that decoding and re-encoding afresh (i.e., with a new matrix A) is technically possible. However, refreshing the encoding matrix $A$ during the execution of the processing function might lead to weak spots inbetween, that is a divulgation of an unmasked variable or undetected corruption of a variable, in both cases the "inner computation" variable having a risk to be sensitive (i.e., depending on a secret, or critical for the computation integrity).

Further, the multiplication operation performed by the multiplier 105 is masked using the *pseudo-inverse matrix A $^{-1}$* of the encoding matrix $A$, and the pseudo-inverse transpose matrix $A^{-T}$ of the encoding matrix $A$. As used herein, $A^{-T}$ is a shortcut notation of $(A^{-1})^T$.

In the embodiments where A is a square matrix, the *pseudo-inverse matrix A $^{-1}$* of the encoding matrix $A$ is the inverse matrix, and the pseudo-inverse transpose matrix $A^{-T}$ of the encoding matrix $A$ is the inverse transpose matrix (the term "pseudo-inverse" is therefore used herein for the general case where the encoding matrix is rectangular).

In some aspects, the encoder 102 may be configured to encode all internal variables involved in the execution of the basis operations including the internal variable involved in the additional operations. In such embodiments, only the initial data input $X$ (also denoted $X_{in}$) and final output of f(X) can be in plain-text (non-encoded). The initial data input $X$ may be initially in plain-text (not encoded), but when it is used to execute the processing function, the initial data input $X$ is encoded.

In some embodiments, the encoding matrix $A$ specifies a general code-based masking (CBM) scheme consisting in padding the k symbols with m random numbers to determine a masked vector of length $n$ ($n \geq k + m$) belonging to $\mathbb{F}^n$, the encoding matrix $A$ being a $(k + m) \times n$ matrix with elements in the field $\mathbb{F}$.

In some embodiments, the random determination of the information code C and the masking code D comprise selecting the information code C and the random D such that the codes C and D satisfy one or more code properties, which may include security properties and/or efficiency properties in terms of PPA (Performance, Power & Area).

For example, in aspect, the masking code D may be determined such as it has the largest possible dual distance, in the finite field of interest for the application to satisfy a security property.

In another aspect, the masking code D may be sparse (even in its subfield, e.g., $\mathbb{F}_2$, when the main field $\mathbb{F}$ is composite) or structured to satisfy a performance power area (PPA) criteria.

In some embodiments, the information code C and the masking code D are determined such that they do not overlap (except in {0}) and span a subspace.

The protection device 10 may further comprise a decoder 110 configured to apply a decoding operation to words which have been previously encoded by the encoder 102 during the execution of the processing function (input data $x$ received by the processing system 1 and/or inputs of the elementary functions). In response to a received encoded input $\hat{X}$, the decoder 110 is configured to provide a decoder output comprising the original data $X$, using the received encoded input $\hat{X}$ and the pseudo-inverse matrix $A^{-1}$ of the encoder matrix $A$.

In some aspects, the protection device 10 may further comprise a refreshing unit 106 configured to perform a refreshing operation, at one or more instant times during the execution of the processing function, the refreshing operation consisting in determining a refreshed encoded word $\hat{X}'$ for an encoder input word $X$ previously applied to the encoder 102 to deliver an encoded word $\hat{X}$ such that both encoded word $\hat{X}$ and the refreshed encoded word $\hat{X}'$ correspond to the same input information word $X$, the refreshing unit 106 being configured to replace the encoded word $\hat{X}$ by the refreshed encoded word $\hat{X}'$.

The protection device 10 may also comprise a checking unit 108 (also called 'fault detection unit') configured to perform a checking operation consisting in checking if a computing error occurred in the operations performed by the encoder 102, the adder 104, and or the multiplier 105.

The embodiments of the invention enable protecting information against side-channel analysis (SCA) and fault injection attacks (FIA) using masking. The protection against side-channel analysis requires code-based masking with random numbers, whereas protecting against fault injection attacks requires error-detection coding on top of masked information.

The protection device 10 is configured to ensure side-channel protection against side-channel attacks and to perform fault injection detection.

To facilitate the understanding of the following description of some embodiments, the following definitions are provided.

It is considered that the information processing system 1 manipulates information word represented as vectors of information symbols, the information symbols belonging to a finite field $\mathbb{F}$, which can be:

- a binary field, i.e. $\mathbb{F} = \mathbb{F}_{2^q}$, when symbols are bit vectors of length q, or simply

- a prime field, i.e. $\mathbb{F} = \mathbb{F}_p$, where p is a prime number, when symbols are natively integers modulo p.

The following description of some embodiments of the invention will be essentially made with reference to any finite field $\mathbb{F}$ of characteristic p (p being a prime number, equal to 2 or more). The notation $\mathbb{F}$ will be therefore used to represent the considered finite field. For instance:

- In an application of the invention where the processing function is an AES or SM4 function, $\mathbb{F} = \mathbb{F}_{2^8} = \mathbb{F}_{256}$ (byte-oriented),

- In an application of the invention where the processing function is a lightweight ciphers PRESENT function, $\mathbb{F} = \mathbb{F}_{2^4} = \mathbb{F}_{16}$ (nibble-oriented),

- In an application of the invention where the processing function is a Post-Quantum Cryptographic algorithm, such as Crystals Kyber function, $\mathbb{F} = \mathbb{F}_p = \mathbb{F}_{3329}$ or Crystals Dilithium function, $\mathbb{F} = \mathbb{F}_p = \mathbb{F}_{8380417}$.

An input information word x, to which the execution function f is to be applied, consists in k symbols, which can be protected together (e.g., utilizing concept of "cost amortization").

The side-channel protection leverages m independent random masks y.

The fault detection is applied on top, and allows inserting some redundancy to be able to verify that the data z be not altered. It consists in applying a word of e symbols and checking for its value at some points in the function execution method. For example, these e words are null. The fact that the redundancy "covers" the masked data allows to avoid this protection from diminishing (interfering negatively) with it.

In the following description of some embodiments, the following notations will be used:

- uppercase letters (e.g., X) will be used for random variables and lowercase letters (e.g., x) will be used for their realizations.

- Vectors and matrices (e.g., X) will be generally written in bold characters and subscripts (e.g., $X_i$ or $X_{i,j}$) are used to index the elements of such data structures.

- the parameters k, m, e and n will be used to denote respectively the size of information symbols, the size of random masks, the size of error detection indicators and the size of masking sharing.

The parameters k, m, e and n are such that $n \geq k + m + e$. In the following description, it will be considered that $n' = k + m + e$ for the sake of simplification and for illustration purpose only, so that $n \geq n'$.

All the computations performed by the protection device 10 and the processing device 11 are performed in the finite field $\mathbb{F}$.

Further:

- The notation X will be used to denote any information variable (also called 'information word') that is encoded by the protection device 10 with includes the initial input received by the processing system 1 to which the processing function f is to be applied, but also one of the inputs to which on elementary operation is to be applied (the other input being noted Y);

- Then notation $M_X$ will be used to denote the mask variable associated with X;

- The notation $\varepsilon_X$ will be used to denote the error indicator variable associated with X;

- The notation $\hat{X}$ will be used to denote the encoded variable ($\hat{Y}$ for the other input Y);

- The notation $\hat{Z}$ or $\hat{Z}'$ will be used to denote the output resulting from the execution of an elementary operation, corresponding to original data Z or Z' respectively.

Further, some intermediary functions used in relation with embodiments of the invention are further defined.

A first intermediary function is called flatten function. A flatten function serializes a matrix to a vector by concatenating each row in the matrix. Specifically, the operator flatten turns an $I \times J$ matrix M, defined according to equation 1, with elements in $\mathbb{F}$, into a vector which contains all elements albeit laid out in a linear arrangement:

$$M = \begin{pmatrix} m_{1,1} & \cdots & m_{1,J} \\ m_{2,1} & \ldots & m_{2,J} \\ \vdots & \ddots & \vdots \\ m_{I,1} & \cdots & m_{I,J} \end{pmatrix} \quad (1)$$

Taking a matrix **M** as in equation (1), the way the flatten function operates is defined according to formula (2) :

$$flatten : \mathbb{F}^{I \times J} \rightarrow \mathbb{F}^{1 \times IJ}$$
$$flatten(M) = (m_{1,1}, \ldots, m_{1,J}, \ldots, m_{2,1}, \ldots, m_{2,J}, \ldots, m_{I,1}, \ldots, m_{I,J}) \quad (2)$$

The inverse operation of the flatten function, denoted *flatten*$^{-1}$, reshapes a vector to a matrix. More specifically, taking a (row) $vector \in \mathbb{F}^{1 \times IJ}$ , the inverse flatten function *flatten*$^{-1}$ operates according to equation (3):

$$flatten^{-1} : \mathbb{F}^{1 \times IJ} \rightarrow \mathbb{F}^{I \times J}$$
$$flatten^{-1}(V) = \begin{pmatrix} v_1 & \cdots & v_{1J} \\ v_{J+1} & \cdots & v_{2J} \\ \vdots & \ddots & \vdots \\ v_{(I-1)J+1} & \cdots & v_{IJ} \end{pmatrix} \quad (3)$$

As used herein, the notation $\mathbb{F}^{1 \times IJ}$ with the exponent 1 x IJ is used to indicate that the vector is horizontal.

A second intermediary function used in connection with embodiments of the invention is called 'pick function'. The pick function picks some elements in a vector. The pick function can be expressed by using the vectorized operation by multiplying with a matrix S.

While the flatten operator will yield an $I \cdot J$-long vector when fed with a $I \times J$ matrix, the pick operator picks the first element in the first $J$-symbol chunk, then the second element in the second $J$-symbol chunk, etc. It will be considered in the following description, that $I \leq J$.

By induction, the matrix S in pick operator is defined as:

$$S = \begin{pmatrix} S_1 \\ \hline S_2 \\ \hline \vdots \\ \hline S_I \end{pmatrix} = \begin{pmatrix} 1 & 0 & \cdots & 0 \\ 0 & 0 & \ldots & 0 \\ \vdots & \vdots & \ddots & \vdots \\ 0 & 0 & \cdots & 0 \\ \hline 0 & 0 & \cdots & 0 \\ 0 & 1 & \cdots & 0 \\ \vdots & \vdots & \cdots & \vdots \\ 0 & 0 & \cdots & 0 \\ \hline \vdots & \vdots & \ddots & \vdots \\ 0 & 0 & \cdots & 0 \\ \vdots & \vdots & \cdots & \vdots \\ 0 & 0 & \cdots & 1 \\ \vdots & \vdots & \cdots & \vdots \end{pmatrix} \in \mathbb{F}^{IJ \times J} \quad (4)$$

In formula (4), each term $S_i$ has a size $J \times I$ and has only single non-zero element $(S_i)_{i,i}$, for $1 \leq i \leq I$. If $I \neq J$, then **S** is not a square matrix, but the pick operator keeps the same.

More formally, taking a vector $X \in \mathbb{F}^{1 \times IJ}$, the pick function is defined according to formula (5) :

$$pick : \mathbb{F}^{1 \times IJ} \rightarrow \mathbb{F}^{1 \times I}$$
$$pick(X) = XS \quad (5)$$

By combining the two operators flatten and pick, the following nominal operation to execute is obtained by taking two vectors $x, y \in \mathbb{F}^{I}$ and $I = J$:

$$pick\big(flatten(x^T y)\big) = flatten((x^T y)S = (x_1 y_1, \dots, x_I y_I) \quad \text{(6A)}$$

The combined operator *pick(flatten(x^Ty))* actually selects the diagonal elements of the targeted matrix in a vectorial fashion so that:

$$diag(x^T y) = pick\big(flatten(x^T y)\big) = flatten((x^T y)S \quad \text{(6B)}$$

In the following description of some embodiments, the size of S will be specified depending on the operation context.

The encoding matrix **A** used by tweakable code-based masking scheme is a matrix that turns *k* symbols of information and m symbols of masking material into a masked vector of length *n* (recall that $n \geq n' = k + m + e$), which shall detect e faults. The matrix **A** is therefore a rectangle $n' \times n$ matrix in $\mathbb{F}$.

In some embodiments, the encoding matrix **A** may be a square matrix for example.

The encoding matrix **A** specifies a general code-based masking scheme.

The inverse matrix of **A** is denoted as **A** $^{-1}$ and the pseudo-inverse transpose matrix of **A** is denoted A $^{-T}$. Therefore **A** $^{-1}$ and **A** $^{-T}$ satisfy the equation :

$$(A^T)^{-1} = (A^{-1})^T$$

It should be noted that if the encoding matrix **A** is not square, the encoding matrix **A** may be defined using a Vandermonde matrix **V,** of size $n \times n$. A Vandermonde matrix **V** is related to Reed-Solomon codes. as the generator matrix of a Reed-Solomon code is a Vandermonde matrix. The use of Vandermonde matrices to generate the encoding matrix is particularly advantageous, as reed-Solomon codes are optimal codes, in the sense that they reach the Singleton bound. Moreover, random Vandermonde matrices are easy to build. It is sufficient to select n different non-zero field elements $\alpha_1, \dots, \alpha_n$, and to define the matrix V as $V = (\alpha_j^{i-1})$, where $1 \leq i \leq n$ is the row index and $1 \leq j \leq n$ the column index. In such case, the encoding matrix A can be written:

$$A = (I_{n'} \quad 0) V \in \mathbb{F}^{n' \times n}$$

As a result, the *pseudo-inverse matrix* of **A**, also denoted by **A** $^{-1}$, is equal to:

$$A = V^{-1} \begin{pmatrix} I_{n'} \\ 0 \end{pmatrix} \in \mathbb{F}^{n \times n'}$$

As mentioned, a Vandermonde matrix is a matrix with the terms of a geometric progression in each row (a sequence of non-zero numbers where each term after the first in the row is found by multiplying the previous one by a fixed, non-zero number also referred to as "common ratio"). Therefore, the entries of the V matrix denoted $V_{i,j}$ meet the relation $V_{i,j} = v_i^j$, with $v_i^j$ being the *j*-éme power of the number $v_i$, for all zero-based indices *i* and *j*.

Considering the above construction of **A** and **A** $^{-1}$, then:

$$A . A^{-1} = I_{n'} \in \mathbb{F}^{n' \times n'} \quad (7)$$

For each received input vector $X \in \mathbb{F}^k$, the protection device is further configured to determine *random masks* $M_X \in \mathbb{F}^m$ *and an error indicator* $\epsilon_X \in \mathbb{F}^e$. The random masks may be refreshed as often as possible. The error indicator $\varepsilon_X$ may be for example set to the zero constant. The random masks $M_X$ may be initialized by taking random values over $\mathbb{F}^m$, that is uniformly distributed.

*We can add a sentence saying that random masks are generated (initialized) randomly.*

The matrix A may be pre-computed and then used to encode any input data X.

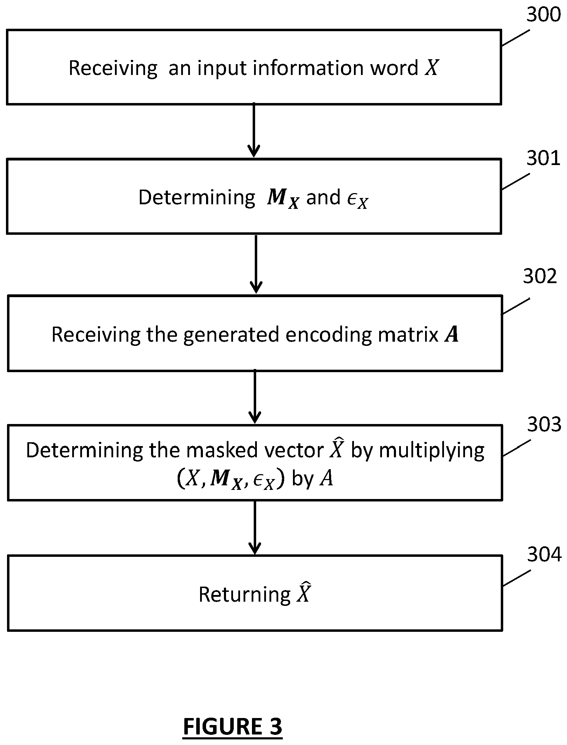

Figure 3 is a flowchart depicting the masked encoding operation applied by the encoder 102 using a generated encoding matrix **A,** according to some embodiments.

The encoding matrix **A** enables taking $k$ information symbols to process an input information word *x,* and padding those symbols with m random numbers and e nulls to get a masked vector $\hat{x} \in \mathbb{F}^n$.

In step 300, the input information vector $X \in \mathbb{F}^k$ is received.

In step 301, the associated random masks $M_X \in \mathbb{F}^m$ and the associated error indicator $\epsilon_X \in \mathbb{F}^e$ are determined.

In step 302, the generated encoding matrix **A** is received.

In step 303, the input information vector $X \in \mathbb{F}^k$ is encoded (or masked) using the encoding matrix A and random masks $M_X$. More specifically, given the information $X \in \mathbb{F}^k$, the random masks $M_X \in \mathbb{F}^m$ and the error indicator $\epsilon_X \in \mathbb{F}^e$, the encoder matrix $A \in \mathbb{F}^{n' \times n}$ is applied in step 202 to mix X, $M_X$, and $\varepsilon_X$ such that the unprotected input information vector **X** becomes a masked vector $\hat{X} \in \mathbb{F}^n$ defined by:

$$\hat{X} = (X, M_X, \epsilon_X)A \quad (8)$$

In equation (8), *(X, $M_X$, $\varepsilon_X$)* is multiplied by the matrix A.

In step 304, the masked $\hat{X}$, also referred hereinafter as a *CBM-protected* vector, is returned. The masked vector $\hat{X}$ can advantageously resist side-channel attacks up to order $d_s = d$ - 1, where d is the dual distance of the linear code *D* generated by the matrix and is equal to the m lines of A after the first *k* lines (i.e. the linear code *D* is generated by lines *k* + 1 to *k* + m in the encoding matrix *A*).

In particular, $d_s$ may equal m if **A** has a full rank.

The multiplication by the matrix *A* as defined in equations (7) and (8) implements the *generic encoder 102,* where *n'* is defined by *n' = k + m + e.*

The protection device 10 may include a further fault detection capability denoted by $d_f$ such that $d_f = e$ implemented by the checking unit 108.

Among the elementary operations into which a processing function can be decomposed, the multiplication is usually the most costly operation in masking scheme over $\mathbb{F}_{2q}$.

The multiplication operation performed by the multiplier 105 corresponds to a component-wise product. The component-wise product of the *k* information symbols is not a natural operation. The outer product is, but yields $k^2$ cross-coupled products. Therefore, there is a need to manage the return from $k^2$ intermediate results into the *k* ones that matter.

A prior art component-wise product, without masking, refers to the operation that computes, given two input vectors X and Y having the same length k:

$$prod : \mathbb{F}^k \times \mathbb{F}^k \to \mathbb{F}^k$$
$$Z = prod(X,Y) = (X_1 Y_1, X_2 Y_2, ..., X_k Y_k) \quad (9)$$

In should be noted that the parameter k in equation (9) is an arbitrary positive integer, not limited to the length of information words. In the presence of masking, the component-wise product involves all *n* shares, making it more complicated to achieve.

An elementary operation performed by the adder 104 or by the multiplier 105 involves two operands that will be noted hereinafter x and y, or X and Y in their vector representation, which correspond to input variables applied to an elementary operation associated with the execution of the processing function. Although the same notation x or X is used to designate one of the inputs of the adder or the multiplier, and the initial input received by the processing system 1 on which the execution function *f* is to be applied, it should be noted that they refer to distinct variable. Such similar notation is in particular used to simplify the description of the encoding performed by the encoder 104 as it applies not only to the initial data received by the processing system 1 (otherwise referred to as $X_{in}$) but also to the inputs received by the adder 104 or by the multiplier 105, prior to the execution of the addition or multiplication operation.

Indeed, according to some aspects, prior to executing the addition operation or the multiplication operation, the two inputs received by the adder 104 or the multiplier 105 respectively, namely the vectors *x* and *y*, are protected by the encoder 102, according to the encoding method described with reference to figure 3, which provides the masked vectors $\hat{x}$ and $\hat{y}$, or $\hat{X}$ and $\hat{Y}$ in their vector representation, defined respectively by $\hat{x} = (x, \textbf{\textit{M}}_{\textbf{\textit{x}}}, \varepsilon_x)A$ and $\hat{y} = (y, \textbf{\textit{M}}_{\textbf{\textit{y}}}, \varepsilon_y)A$. Further, any intermediate variable involved in the multiplication may be equally masked.

The multiplier 105 is configured to apply a masked component-wise product function $prod_{msk}$ to inputs $\hat{X}$ and $\hat{Y}$ being the masked vectors of *X* and *Y* respectively, defined as :

$$prod_{msk} : \mathbb{F}^n \times \mathbb{F}^n \to \mathbb{F}^n$$
$$\hat{Z} = prod_{msk}(\hat{X}, \hat{Y}) \qquad (10)$$

Equation (10) is such that the demasked variable is defined by:

$$Z = prod(X, Y) = (X_1 Y_1, X_2 Y_2, \dots, X_k Y_k).$$

The masked component-wise product function may be redefined as:

$$\hat{Z} = prod_{msk}(\hat{X}, \hat{Y}) = \text{flatten}\left(A^{-T}(\hat{X}^T \hat{Y})\right)\hat{S} \quad (11)$$

In equation (11), the matrix S is an initialization of equation (4), with I = J = n', and $\hat{S} \in \mathbb{F}^{nn' \times n'^2}$ is defined according to formula (12):

$$\hat{S} = \begin{pmatrix} A^{-1} & 0 & \cdots & 0 \\ 0 & A^{-1} & \cdots & 0 \\ \vdots & \vdots & \ddots & \vdots \\ 0 & 0 & \cdots & A^{-1} \end{pmatrix} SA \quad (12)$$

Indeed, equation (8) can be simplified using the following notations:

$$a = (X, \textbf{\textit{M}}_X, \epsilon_X)A \in \mathbb{F}^{n'} \implies \hat{X} = \textbf{a}A$$
$$b = (Y, \textbf{\textit{M}}_Y, \epsilon_Y)A \in \mathbb{F}^{n'} \implies \hat{Y} = \textbf{b}A \qquad (13)$$

Accordingly, it comes:

$$A^{-T}((\textbf{a}A)^T(\textbf{b}A)) = (\textbf{a}^T\textbf{b})A = \textbf{a}^T(ba) = \begin{pmatrix} (a_1 b_1, \dots, a_1 b_{n'})A \\ (a_2 b_1, \dots, a_2 b_{n'})A \\ \vdots \\ (a_{n'} b_1, \dots, a_{n'} b_{n'})A \end{pmatrix} \quad (14)$$

Therefore, the right-hand side of Equation (11) can therefore be written according to formula (15) :

$$\text{flatten}\left(A^{-T}(\hat{X}^T\hat{Y})\right)\hat{S} = \text{flatten}\left(A^{-T}((aA)^T(bA))\right)\hat{S}$$

$$= \text{flatten}\begin{pmatrix} (a_1b_1, ..., a_1b_{n'})A \\ (a_2b_1, ..., a_2b_{n'})A \\ \vdots \\ (a_{n'}b_1, ..., a_{n'}b_{n'})A \end{pmatrix}\hat{S} \quad (15)$$

$$= (\text{flatten}\,(a^Tb)S)A$$
$$= (a_1b_1, a_2b_2, ..., a_{n'}b_{n'})A$$
$$= \hat{Z}$$

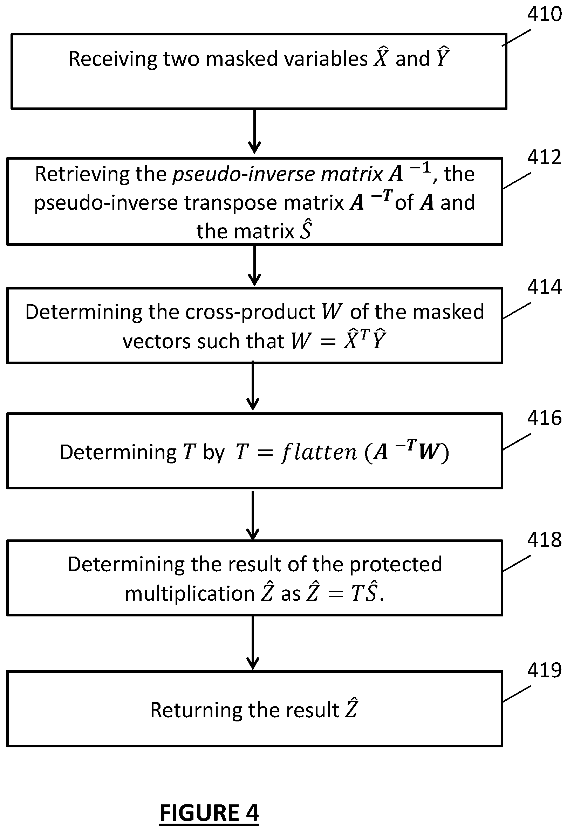

Figure 4 is a flowchart depicting the method for determining a masked component-wise multiplication $\hat{Z} = prod_{msk}(\hat{X}, \hat{Y})$ from two masked variables $\hat{X}$ and $\hat{Y}$ received as inputs.

In step 410, the two masked variables $\hat{X}$ and $\hat{Y}$ are received.

In step 412, the *pseudo-inverse matrix* $A^{-1}$ of $A$, the pseudo-inverse transpose matrix $A^{-T}$ of $A$ and the matrix $\hat{S}$ defined by formula 12 are retrieved. The *pseudo-inverse matrix* $A^{-1}$ of $A$, the pseudo-inverse transpose matrix $A^{-T}$ of $A$ and the matrix $\hat{S}$ defined by formula 12 may be precomputed and used for the complete execution of the processing function (which may comprise a series of elementary operation such as for example a series of additions and multiplications in the case of the AES algorithm).

In step 414, the cross-product W of the masked vectors is determined from the first masked variable $\hat{X}$ and the second masked variable $\hat{Y}$ such that $W = \hat{X}^T\hat{Y}$.

In step 416, the result of the multiplication is flattened by applying the flatten function to $A^{-T}W$ which provides the flattened matrix $T$ defined as $T = flatten\,(A^{-T}W)$.

In step 418, the protected multiplication $\hat{Z}$ is determined by performing the product of the flattened matrix $T$ and of the matrix $\hat{S}$ such that $\hat{Z} = T\hat{S}$.

In step 410, the result is returned $\hat{Z}$.

The end-to-end masked equation (11) is inspired by the computation specified in equation (6).

In equation (15), the following variables are all masked:

- The variables (*aA*) and (*bA*);
- The variable (*flatten*($a^Tb$)*S*)*A*.

In equation (11), the expressions are to be evaluated in the order governed by the parentheses. Besides, in some embodiments, the left-wise application of $A^{-T}$ of equation (11) may be delayed.

It should be noted that the matrix $\hat{S}$ may be pre-computed for speed-up online computation, instead of computing it in step 412 in the same step as the *pseudo-inverse matrix* $A^{-1}$ of A, the pseudo-inverse transpose matrix $A^{-T}$ of $A$.

In some cases, if step 416 is not performed as expected, certain vulnerabilities might appear (for example unintended demasking of either $\hat{X}$ or $\hat{Y}$). To prevent such vulnerabilities, in some embodiments, some internal randomness may be added to enhance the side-channel resistance in step 416 (flattening step).

In such embodiments using internal randomness, the method of determining a masked component-wise multiplication may comprise a generation of a random matrix and use the random matrix to enhance the side-channel resistance in step 416.

To introduce the internal randomness and generate the random matrix, a parameter $\gamma \in \{0, ..., n^2 - 1\}$ may be introduced, representing a linear indexing of a matrix of size $n \times n$ and defined by $\gamma = \mu n + \lambda$, where $\mu$ and $\mu \in \{0, ..., n-1\}$. For the sake of simplifications, the notation $\mathbf{B} = A^{-T}$ and $B' = A^{-1}$ will be also used.

The random matrix $\hat{R} \in \mathbb{F}^{n \times n}$ may be determined such that $diag(A^{-T}\hat{R}A^{-1}) = diag\,(B'\hat{R}B') = 0_{n'}$, where diag denotes the diagonal elements of the matrix and $\mathbf{0}_{n'}$ is a zero-vector of length $n'$.

The element (*i, i*) of $B\hat{R}B'$ for $0 \le i < n'$, is equal to:

$$\sum_{\mu,\lambda} B_{i,\mu}\,\hat{R}_{\mu,\lambda}\,B'_{\lambda,i} = \sum_{\mu,\lambda}\hat{R}_{\mu,\lambda}\,(B'_{\mu,i}B'_{\lambda,i}) = \sum_{\gamma}\hat{R}_{\gamma}\,(B'_{\gamma \div n,i}B'_{\gamma \bmod n,i}) \quad (16)$$

In formula (16), $\overline{R}$ is the linearized vector of the matrix $\hat{R}$ of length $n^2$, and is defined by $\overline{R} = flatten\,(\hat{R})$. Then the solution exists in :

$$\overline{R}M = 0_{n'} \quad (17)$$

In equation (17), $\boldsymbol{M}$ is an $n^2 \times n'$ matrix, whose $(i,j)$ coefficient is:

$$M_{i,j} = B'_{i \div n, j} B'_{i \bmod n, j} \text{ (18)}$$

For example, the solution to equation (18) may be given in Magma computer algebra system by using the *KernelMatrix*.

The generation of the random matrix $\hat{R}$ may then comprise:

- Determining a random seed *sd* uniformly in $\mathbb{F}^{n^2 - n'}$ ;
- Determining the kernel matrix of $\boldsymbol{M}$, denoted as *ker*($\boldsymbol{M}$);
- Determining the random matrix $\hat{R} = flatten^{-1}(sd.\ \mathrm{ker}(\boldsymbol{M}))$.

Using equations (16) and (17), each element $(i, i)$ of $\boldsymbol{A^{-T}} \hat{R}\ \boldsymbol{A^{-1}}$ equals 0 for $1 \le i < n'$. Therefore, the generated random matrix $\hat{R}$ satisfies the following equation (19):

$$diag\left( \boldsymbol{A^{-T}} \hat{R}\ \boldsymbol{A^{-1}} \right) = diag\left( B\hat{R}C \right) = 0_{n'} \text{ (19)}$$

The determination of the masked component-wise product defined in equation (11) can be enhanced by adding internal randomness according to equation (20):

$$\hat{Z} = prod_{msk}\left( \hat{X}, \hat{Y} \right) = \mathrm{flatten}\left( A^{-T}\left( \hat{X}^T \hat{Y} + \hat{R} \right) \right)\hat{S}\ \text{ (20)}$$

The matrices S and Ŝ used in equation (20) are the same as the ones used in equation 11.

Indeed, given a matrix $\boldsymbol{M}$, according to equation (6B), the diagonal elements of the matrix $\boldsymbol{M}$ are defined by:

$$diag(\boldsymbol{M}) = pick(flatten(\boldsymbol{M})) = flatten(\boldsymbol{M})\boldsymbol{S}$$

Equation (19) further indicates that flatten($\boldsymbol{A^{-T}} \hat{R}\ \boldsymbol{A^{-1}}$)$\boldsymbol{S}$ = $0_{n'}$

Therefore:

$$\mathrm{flatten}\left( A^{-T}\left( \hat{X}^T \hat{Y} + \hat{R} \right) \right)\hat{S} = \mathrm{flatten}\left( A^{-T}\left( \hat{X}^T \hat{Y} \right) + A^{-T}\hat{R} \right)\hat{S}$$

$$= \mathrm{flatten}\left( A^{-T}\left( \hat{X}^T \hat{Y} \right) \right)\hat{S} + flatten\left( A^{-T}\hat{R} \right)\hat{S}$$

$$= \mathrm{flatten}\left( A^{-T}\left( \hat{X}^T \hat{Y} \right) \right)\hat{S} + flatten\left( A^{-T}\hat{R}\ A^{-1} \right)SA \quad \text{(21)}$$

$$= \mathrm{flatten}\left( A^{-T}\left( \hat{X}^T \hat{Y} \right) \right)\hat{S} + 0_{n'}A$$

$$= \mathrm{flatten}\left( A^{-T}\left( \hat{X}^T \hat{Y} \right) \right)\hat{S} + 0_{n'}A$$

$$= \hat{Z}$$

Accordingly, the determination of the masked component-wise product defined in equation (11) can be enhanced by adding internal randomness according to equation (20):

$$\hat{Z} = prod_{msk}\left( \hat{X}, \hat{Y} \right) = \mathrm{flatten}\left( A^{-T}\left( \hat{X}^T \hat{Y} + \hat{R} \right) \right)\hat{S}\ \text{ (20)}$$

The matrices S and Ŝ are the same as the ones used in equation (11).

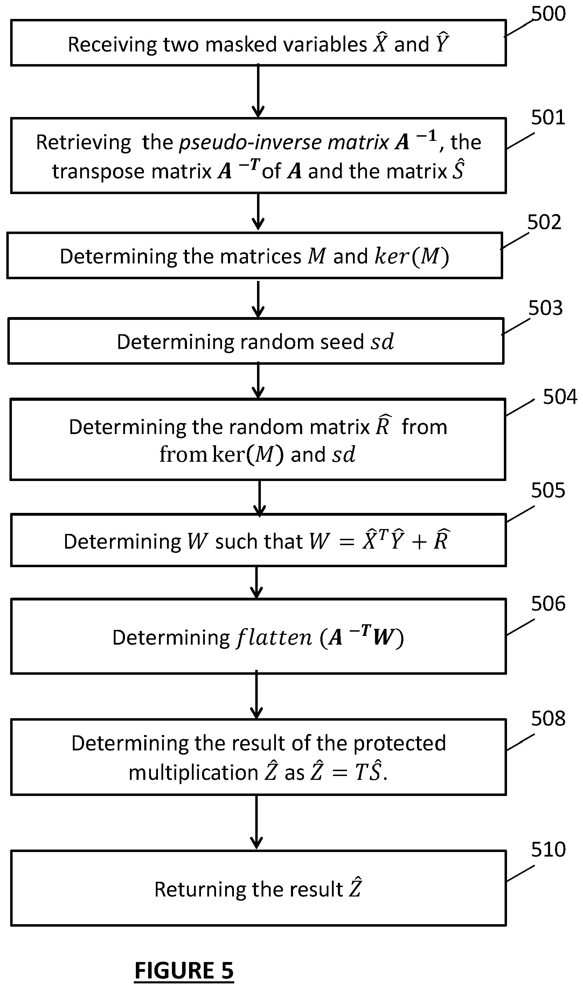

Figure 5 is a flowchart depicting the method for determining a masked component-wise multiplication $\hat{Z} = prod_{msk}(\hat{X}, \hat{Y})$ using the generated the random matrix $\hat{R}$, implemented by the multiplier 105 in response to the receipt of two inputs $\hat{X}$ and $\hat{Y}$ previously encoded by the encoder 102.

In step 501, the pseudo-inverse matrix $\boldsymbol{A^{-1}}$ of $\boldsymbol{A}$, the pseudo-inverse transpose matrix $\boldsymbol{A^{-T}}$ of A and the matrix $\hat{S}$

defined by formula 12 are retrieved. The pseudo-inverse matrix $A^{-1}$ of $A$, the pseudo-inverse transpose matrix $A^{-T}$ of A and the matrix $\hat{S}$ may have been precomputed and used for all the computations performed by the encoder 102, the adder 104, the multiplier 105, and the decoder 110 during the execution of the processing function.

In step 502, the matrix $M$ and the matrix $ker(M)$ are pre-computed according to equation (18).

In step 503, determining a random seed $sd$ is determined uniformly in   $\mathbb{F}^{n^2 - n'}$ .

In step 504, the random matrix $\hat{R}$ is determined by performing $\hat{R} = flatten^{-1}(sd.\ ker(M))$.

In step 505, the sum W of cross-product of the masked vectors and of the random matrix is determined from the first masked variable $\hat{X}$, the second masked variable $\hat{Y}$ and the random matrix $\hat{R}$ such that $W = \hat{X}^T\hat{Y} + \hat{R}$.

In step 506, the result of the multiplication is flattened by applying the flatten function to $A^{-T}W$ which provides the flattened matrix $T$ defined as $T = flatten\ (A^{-T}W)$.

In step 507, the two masked variables $\hat{X}$ and $\hat{Y}$ are received.

In step 508, the protected multiplication $\hat{Z}$ is determined by performing the product of the flattened matrix $T$ and of the matrix $\hat{S}$ such that $\hat{Z} = T\hat{S}$.

In step 510, the result is returned Z.

Steps 502, 503, 504 and 505 have been added or modified with respect to the flowchart of figure NN. By using the random matrix $\hat{R}$, the potential vulnerability is fixed since it removes indirect demasking of $\hat{X}$ and $\hat{Y}$.

It should be noted that the matrices $M$ and $ker(M)$ may be alternatively pre-computed instead of computing them in step 502, during the execution of the method.

The embodiments of the invention provide a *tweakable code-based masking* (TCBM) method and device against side-channel attacks by providing higher-order protection for crypto systems. Advantageously, the TCBM method and device be configured to detect faults against fault injection attacks.

Turning back to figure 1, by using the different blocks of the protection device 10 and of the processing device 11, any function $f$ of the processing system 1 (for example any cryptographic function such as AES(X) or any other function such as sqrt(X)) may be protected and implemented securely.

The tweakable code-based masking (TCBM) scheme enables to efficiently use masked protection and processing operations including:

-   The masked encoding operation $ENC_{msk}$ applied by the encoder 102 ;
-   The masked decoding operation $DEC_{msk}$ applied by the decoder 110;
-   The masked addition operation $ADD_{msk}$ applied by the adder 102; and/or
-   The masked multiplication operation $MULT_{msk}$ applied by the multiplier 105.

The masked protection and processing operations using the TCBM scheme may further include:

-   The masked refreshing operation $REF_{msk}$ applied by the refreshing unit 106 ; and/or

-   The masked checking operation $CHK_{msk}$ applied by the checking unit 108.

It should be noted that although some aspects of the instant disclosure are described herein conjointly (in particular the different component 102, 104, 105, 106, 108, 110), they can be used separately or independently or according to different combinations of components.

As described with reference to figure 3, the encoder 102 is configured to apply a masked encoding operation $ENC_{msk}$ using the encoding matrix $A$ defined by equation (8). Given an input information word vector $X$, the masked encoding operation comprises encoding $X$ into a masked variable $\hat{X}$ from X, the random mask $M_X$, the error indicator $\varepsilon_X$ and the encoder matrix A such that:

$$\hat{X} = ENC_{msk}(X, M_X, \epsilon_X) = (X, M_X, \epsilon_X)A \ (22)$$

In some aspects, the decoder 110 may be configured to apply a masked encoding operation $DEC_{msk}$ to an encoded input $\hat{X}$ using the encoding matrix $A$. More specifically, given an input encoded word vector $\hat{X}$, the masked decoding operation outputs the original data $X$ using $\hat{X}$ and the inverse matrix $A^{-1}$ of the encoder matrix A such that:

$$(X, M_X, \epsilon_X) = DEC_{msk}(\hat{X}) = \hat{X}A^{-1} \ (23)$$

In equation (23), $A^{-1}$ is the pseudo-inverse matrix of $A$, defined according to equation (7).

In some aspects, the adder 104 may be configured to determine the masked addition operation $ADD_{msk}$ using the

encoder matrix *A*. The masked addition operation performed by the adder 104 is a component-wise addition. More specifically, the adder 102 is configured to receive two encoded word vectors $\hat{X}$ and $\hat{Y}$, which corresponds respectively to original data *X* et *Y*, previously encoded by the encoder 102 according to equation (20) using the encoding matrix $\hat{A}$ and to apply the masked addition operation to determine an encoded word $\hat{Z}'$, from

$$Z' = X + Y = (X_1 + Y_1, X_2 + Y_2, \dots, X_n + Y_n) \in \mathbb{F}^k$$ , $\hat{X}$ and $\hat{Y}$ such that:

$$\widehat{Z'} = ADD_{msk}(\hat{X}, \hat{Y}) = (\hat{X}_1 + \hat{Y}_1, \hat{X}_2 + \hat{Y}_2, \dots, \hat{X}_n + \hat{Y}_n) \quad (24)$$

The masked addition $ADD_{msk}$ is also a component-wise addition.

It should be noted that the symbol '+' used in the above two equations is equivalent to XOR in $\mathbb{F}_{2^q}$ .

According to other aspects, the multiplier 105 may be configured to apply a masked multiplication operation $MULT_{msk}$ using the encoding matrix *A*. The multiplier 105 is more specifically configured to receive two vectors $\hat{X}$ and $\hat{Y}$, corresponding to original data *X* et *Y*, previously encoded by the encoder 102 according to equation (20) using the encoding matrix *A*, and to apply the masked multiplication operation to determine an encoded word such $\hat{Z}$ which corresponds to *Z* such that $Z = X.Y = (X_1 Y_1, X_2 Y_2, \dots, X_n Y_n) \in \mathbb{F}^k$ , $\hat{Z}$ being defined according to equation (25):

$$\hat{Z} = MULT_{msk}(\hat{X}, \hat{Y}) = prod_{msk}(\hat{X}, \hat{Y}) \quad (25)$$

$\hat{Z}$ can be accordingly determined according to the multiplication method of figure 4 or 5 which determines $prod_{msk}$ $(\hat{X}, \hat{Y})$.

In some embodiments, the refreshing unit 106 may be configured to determine the masked refreshing operation $REF_{msk}$ using the encoding matrix A. Given an input encoded word vector $\hat{X}$, previously encoded by the encoder 102 according to equation (20), the refreshing unit 106 is configured to output a new encoded word $\hat{X}'$ ('refreshed encoded word') using the encoder matrix *A* such that:

$$\widehat{X'} = REF_{msk}(\hat{X}) = ADD_{msk}((0, M'_X, 0)A, \hat{X}) \quad (26)$$

The refreshed encoded word X' may be therefore determined by applying a component-wise addition between $(0, M'_X, 0)A$ and the initially determined encoded word $\hat{X}$.

The refreshing computation may be performed, anytime, for any input of the adder and/or the multiplier and/or only for the originally received input word. The frequency of the refreshing computation may vary depending on the application of the invention.

In some aspects, the checking unit 108 may be configured to perform a masked checking operation $CHK_{msk}$ using the encoder matrix *A*.

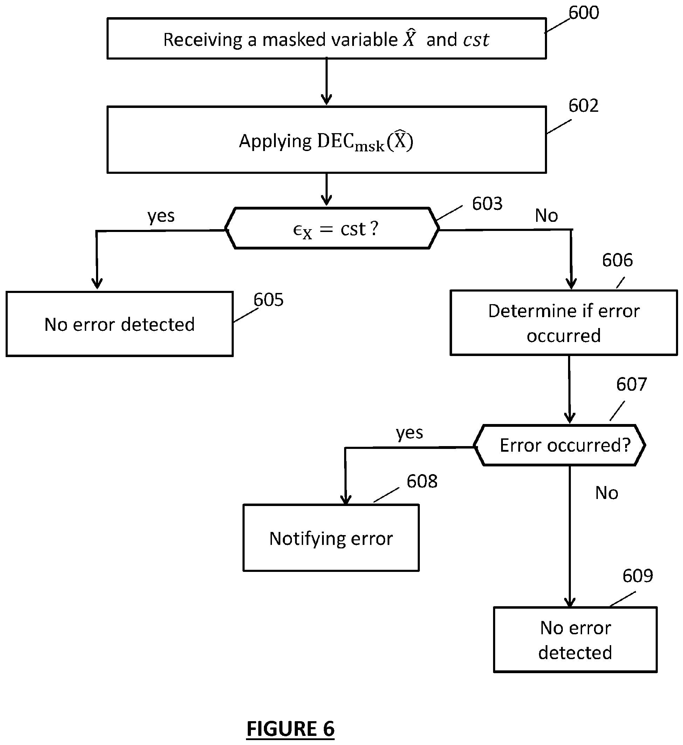

Figure 6 is a flowchart depicting the checking method implemented by the checking unit, according to some embodiments.

In step 600, an input encoded word vector $\hat{X}$ is received. Step 600 may further comprise receiving a predefined constant cst. The input encoded word vector $\hat{X}$ received in step 600 may be any word encoded by the encoding unit 102 that can be decoded and then checked. In particular, step 600 may apply to any encoded variable, including those input to the adder 104 and/or the multiplier 105.

In step 602, a first decoding of $\hat{X}$ is determined by the decoder 110 by performing $(X, M_X, \varepsilon_X) = DEC_{msk}(\hat{X})$, using the encoding matrix *A*, according to equation (23), which provides the original vector X.

Step 603 consists in checking whether the error indicator variable $\varepsilon_X$ associated with *X* meets $\varepsilon_X = cst$ where cst is the predefined constant received in step 600.

In step 604, if it is determined that $\varepsilon_X = cst$, no error is detected (block 605).

In step 606, if it is determined that $\varepsilon_X$ is different from cst ($\varepsilon_X \neq cst$), it is checked whether an error occurred during the computation, by a syndrome decoding technique using syndromes of linear codes. Syndrome decoding is a method of decoding a linear code over a noisy channel, where errors may have been made. Syndrome decoding is a minimum distance decoding using a reduced lookup table.

If an error occurred (block 607), the error may be notified (block 608). Otherwise no error is detected (block 609).

It can be considered for example an encoding matrix A, generated from a Vandermonde matrix. Using a Vandermonde matrix for *A* has particular advantages as the linear codes generated by Vandermonde matrices are MDS (maximum distance separable) codes with maximized distances. The dual code of a MDS code is also a MDS code, so that the dual distance may be maximized, which can result in the optimal side-channel protection $d_s$. For instance, A is a (transposed) Vandermonde matrix that can be generated as :

$$A = \begin{pmatrix} 1 & 1 & 1 & \cdots & 1 \\ \alpha_1 & \alpha_2 & \alpha_3 & \cdots & \alpha_n \\ \vdots & \vdots & \vdots & \ddots & \vdots \\ \alpha_1^{n'-1} & \alpha_2^{n'-1} & \alpha_3^{n'-1} & \cdots & \alpha_n^{n'-1} \end{pmatrix} \qquad (29)$$

In the encoding matrix $A$ according to definition (29), $\alpha_i \neq \alpha_j$ for any distinct $i, j \in [1, n]$. The encoding matrix A can be optimized by selecting optimal elements $\alpha_i$ for $1 \leq i \leq n$ in the sense that $d_s$ is maximized at bit-level (e.g., over $\mathbb{F}_2$).

Further, the following example will be made considering that $q = 8$, and $\mathbb{F} = \mathbb{F}_{2^8}$ like in the block ciphers AES or SM4, and the irreducible polynomial is: $P(\alpha) = \alpha^8 = \alpha^4 + \alpha^3 + \alpha^2 + 1$. Further, the parameters $k$, m, $e$, n and $n'$ are defined by $k = 2$, $m = 2$, $e = 1$ and $n = 6$, thus $n' = 5 < n$.

An irreducible polynomial is a polynomial that cannot be factored into the product of two non-constant polynomials and is used to generate a finite field.

The encoding matrix A is then randomly generated as follows:

$$A = \begin{pmatrix} 1 & 1 & 1 & 1 & 1 & 1 \\ \alpha^{29} & \alpha^{230} & \alpha^{164} & \alpha^{149} & \alpha^{37} & \alpha^{183} \\ \alpha^{58} & \alpha^{205} & \alpha^{73} & \alpha^{43} & \alpha^{134} & \alpha^{111} \\ \alpha^{87} & \alpha^{180} & \alpha^{237} & \alpha^{192} & \alpha^{201} & \alpha^{39} \\ \alpha^{116} & \alpha^{155} & \alpha^{146} & \alpha^{86} & \alpha^{13} & \alpha^{222} \end{pmatrix} \in \mathbb{F}^{5 \times 6}$$

The inverse matrix $A^{-1}$ of the encoding matrix A is then determined as:

$$A^{-1} = \begin{pmatrix} \alpha^{211} & \alpha^{99} & \alpha^{226} & \alpha^{175} & \alpha^{155} \\ \alpha^{138} & \alpha^{251} & \alpha^{37} & \alpha^{104} & \alpha^{199} \\ \alpha^{106} & \alpha^{13} & \alpha^{170} & \alpha^{221} & \alpha^{84} \\ \alpha^{243} & \alpha^{41} & \alpha^{72} & \alpha^{43} & \alpha^{82} \\ \alpha^{139} & \alpha^{199} & \alpha^{164} & \alpha^{52} & \alpha^{76} \\ \alpha^{68} & \alpha^{25} & \alpha^{121} & \alpha^{41} & \alpha^{134} \end{pmatrix} \in \mathbb{F}^{6 \times 5}$$

The two following random vectors are then considered:

$$(x, m_x, \epsilon_x) = (\alpha^{27}, \alpha^{147}, \alpha^{212}, \alpha^8, \alpha^{151})$$

$$(y, m_y, \epsilon_y) = (\alpha^{226}, \alpha^{137}, \alpha^{65}, \alpha^{62}, \alpha^6)$$

The encoder 102 will then determine the corresponding masked vectors $\hat{x}$ and $\hat{y}$ as follows:

$$\hat{x} = ENC_{msk}(x, m_x, \epsilon_x) = (x, m_x, \epsilon_x)A = (\alpha^{160}, \alpha^{79}, \alpha^{133}, \alpha^{34}, \alpha^{194}, \alpha^{167})$$

$$\hat{y} = ENC_{msk}(y, m_y, \epsilon_y) = (y, m_y, \epsilon_y)A = (\alpha^{244}, \alpha^{254}, \alpha^{208}, \alpha^{197}, \alpha^{187}, \alpha^{51})$$

The adder 104 can then determine the sum of $\hat{x}$ and y using the masked addition operation $ADD_{msk}$ according to the following equation:

$$\hat{z}' = ADD_{msk}(\hat{x}, \hat{y}) = (\alpha^{200}, \alpha^{167}, \alpha^{77}, \alpha^{216}, \alpha^{44}, \alpha^{10})$$

By decoding $\hat{z}'$ using $DEC_{msk}$, it can be verified that:

$$DEC_{msk}\left(\widehat{\boldsymbol{z'}}\right) = (\boldsymbol{z}, \boldsymbol{m_z}, \epsilon_z) = (\alpha^{102}, \alpha^{158}, \alpha^{118}, \alpha^{216}, \alpha^{22})$$

with $z' = (x_1 + x_1, x_2 + y_2) = (\alpha^{102}, \alpha^{158})$.

The multiplier 105 can further determine the product of $\hat{x}$ and $\hat{y}$ using the masked multiplication operation $MULT_{msk}$ and output $\hat{z} = MULT_{msk}(\hat{x}, \hat{y})$, according to the method of figure 5 that uses the random matrix.

The matrices $\hat{S}$, $M$ and $ker(M)$ are not shown below to simplify the description of this example.

In step 503 of figure 5, the random seed *sd* is determined in $\mathbb{F}^{31}$ as $n^2 - n' = 31$, as follows:

$$sd = \left(\alpha^{172}, \alpha^{100}, \alpha^{165}, \alpha^{253}, \alpha^{207}, \alpha^{200}, \alpha^{155}, \alpha^{250}, \alpha^{133}, \alpha^{51}, \alpha^{204}, \alpha^{138}, \right.$$
$$\alpha^{213}, \alpha^{58}, \alpha^{18}, \alpha^{129}, \alpha^{47}, \alpha^{45}, \alpha^{180}, \alpha^{11}, \alpha^{109}, \alpha^{244}, \alpha^{142}, \alpha^{96},$$
$$\left. \alpha^{186}, \alpha^{145}, \alpha^{72}, \alpha^{56}, \alpha^{242}, \alpha^{101}, \alpha^{199}\right) \in \mathbb{F}^{31}.$$

In step 504 of figure 5, the random matrix $\hat{R}$ is then determined by performing $\hat{R} = flatten^{-1}(sd.ker(M))$, as follows:

$$\widehat{\mathbf{R}} = flatten^{-1}(sd \cdot ker(\mathbf{M}))$$
$$= \begin{pmatrix} \alpha^{188} & \alpha^{57} & \alpha^{37} & \alpha^{154} & \alpha^{128} & \alpha^{172} \\ \alpha^{100} & \alpha^{165} & \alpha^{253} & \alpha^{207} & \alpha^{200} & \alpha^{155} \\ \alpha^{250} & \alpha^{133} & \alpha^{51} & \alpha^{204} & \alpha^{138} & \alpha^{213} \\ \alpha^{58} & \alpha^{18} & \alpha^{129} & \alpha^{47} & \alpha^{45} & \alpha^{180} \\ \alpha^{11} & \alpha^{109} & \alpha^{244} & \alpha^{142} & \alpha^{96} & \alpha^{186} \\ \alpha^{145} & \alpha^{72} & \alpha^{56} & \alpha^{242} & \alpha^{101} & \alpha^{199} \end{pmatrix} \in \mathbb{F}^{6 \times 6}$$

It can be verified that:

$$\text{diag}(\mathbf{A}^{-T}\widehat{\mathbf{R}}\mathbf{A}^{-1}) = \text{diag}\begin{pmatrix} 0 & \alpha^{29} & \alpha^{196} & \alpha^{181} & \alpha^{154} \\ \alpha^{43} & 0 & \alpha^{99} & \alpha^{40} & \alpha^{144} \\ \alpha^{48} & \alpha^{242} & 0 & \alpha^{42} & \alpha^{80} \\ \alpha^{182} & \alpha^{214} & \alpha^{67} & 0 & \alpha^{116} \\ \alpha^{129} & \alpha^{225} & \alpha^{99} & \alpha^{148} & 0 \end{pmatrix} = \mathbf{0}_{n'}$$

In step 505, the matrix $W$ is then determined as $W = \hat{X}^T\hat{Y} + \hat{R}$ from the first masked variable $\hat{X}$, the second masked variable $\hat{Y}$ and the random matrix $\hat{R}$, which provides:

$$\mathbf{W} = \widehat{\mathbf{X}}^T\widehat{\mathbf{Y}} + \widehat{\mathbf{R}}$$
$$= \begin{pmatrix} 1 & \alpha^{23} & \alpha^{150} & \alpha^{243} & \alpha^{62} & \alpha^{23} \\ \alpha^{103} & \alpha^{245} & \alpha^{134} & \alpha^{82} & \alpha^{230} & \alpha^{131} \\ \alpha^{7} & \alpha^{157} & \alpha^{83} & \alpha^{59} & \alpha^{46} & \alpha^{110} \\ \alpha^{55} & \alpha^{51} & \alpha^{205} & \alpha^{85} & \alpha^{140} & \alpha^{6} \\ \alpha^{240} & \alpha^{149} & \alpha^{82} & \alpha^{72} & \alpha^{162} & \alpha^{13} \\ \alpha^{135} & \alpha^{19} & \alpha^{126} & \alpha^{104} & \alpha^{149} & \alpha^{36} \end{pmatrix} \in \mathbb{F}^{6 \times 6}$$

In step 506, the result of the multiplication is flattened by applying the flatten function to $A^{-T}W$ which provides the following flattened matrix $T$ defined as $T = flatten (A^{-T}W)$:

$$\mathbf{T} = \text{flatten}\left(\mathbf{A}^{-\top}\mathbf{W}\right)$$
$$= \left(\alpha^{231}, \alpha^{199}, \alpha^{184}, \alpha^{29}, \ \alpha^{244}, \alpha^{210}, \alpha^{76}, \ \alpha^{30}, \ \alpha^{209}, \alpha^{64}, \ \alpha^{162}, \alpha^{108},\right.$$
$$\alpha^{243}, \alpha^{43}, \ \alpha^{225}, \alpha^{142}, \alpha^{73}, \ \alpha^{162}, \alpha^{254}, \alpha^{98}, \ \alpha^{126}, \alpha^{208}, \alpha^{36}, \ \alpha^{168},$$
$$\left. \alpha^{4}, \ \alpha^{87}, \ \alpha^{223}, \alpha^{138}, \alpha^{204}, \alpha^{70} \right) \in \mathbb{F}^{30}.$$

In step 508, the protected multiplication $\hat{Z}$ is determined by performing the product of the flattened matrix $T$ and of the matrix $\hat{S}$ such that $\hat{Z} = T\hat{S}$.

$$\hat{Z} = T\hat{S} = (\alpha^{218}, \alpha^{100}, \alpha^{44}, \alpha^{97}, \alpha^{89}, \alpha^{212}) \in \mathbb{F}^6$$

In step 510, the result $\hat{Z}$ is returned.
By decoding $\hat{Z}$ using $DEC_{msk}$, it can be verified that:

$$DEC_{msk}\left(\widehat{Z'}\right) = (Z, m_{Z'}, \epsilon_{Z'}) = (\alpha^{253}, \alpha^{29}, \alpha^{22}, \alpha^{70}, \alpha^{157})$$

With $Z = (x_1.x_2, y_1.y_2) = (\alpha^{253}, \alpha^{29})$.
As formally analysed in previous art works (such as for example in Wei Cheng, Sylvain Guilley, Claude Carlet, Jean-Luc Danger, and Sihem Mesnager. Information Leakages in Code-based Masking: A Unified Quantification Approach. IACR Trans. Cryptogr. Hardw. Embed. Syst., 2021(3):465-495, 2021; or in Wei Cheng, Sylvain Guilley, Claude Carlet, Sihem Mesnager, and Jean-Luc Danger. Optimizing Inner Product Masking Scheme by a Coding Theory Approach. IEEE Trans. Inf. Forensics Secur., 16:220-235, 2021), the side-channel resistance of a processing system is upper limited by the security order in the encodings (or decodings) of CBM.
The protection device 10 according to the embodiments of the invention being based on the improved TCBM scheme, the security order is determined by the dual distance of the underlying linear code, generated by the encoding matrix A.
Considering that $d_s$ denotes the side-channel security order, the encoding matrix $A$ may be split (or divided) into three sub-matrices as follows:

$$A = \left(\frac{\frac{A_k}{A_m}}{A_e}\right) \in \mathbb{F}^{\,n'\times n} \quad (27)$$

In Equation (27), the sub-matrix $A_k \in \mathbb{F}^{\,k\times n}$, the sub-matrix $A_m \in \mathbb{F}^{\,m\times n}$ and the sub-matrix $A_e \in \mathbb{F}^{\,e\times n}$.

Each sub-matrix resulting from the division of the encoding matrix $A$ respectively corresponds to a linear code (i.e. a sub-matrix generates a respective linear code). The sub-matrix $A_k$ is thereby associated with a linear code C, the sub-matrix $A_m$ is associated with a linear code $D$ and the sub-matrix $A_e$ is associated with a linear code E.
Considering the matrix subdivision defined by equation (27), the side-channel security order of TCBM is defined by:

$$d_s = d_D^\perp - 1 \quad (28)$$

In equation (28), the linear code D is generated by the sub-matrix $A_m$.
Advantageously, the protection device 10 may provide a fault detection capability against fault injection attack, which is another important threat to cryptographic implementations.
In some embodiment, the checking unit 108 may be configured to cover the computations performed by the different components of the protection device 10 and of the processing device 11, and in particular the computations performed inside the components by the different components 102, 104, 105, 106, 110. For instance, given two masked input vectors $(x, m_x, \varepsilon_x)$ and $(y, m_y, \varepsilon_y)$, the masked multiplication performed by the multiplier 105 returns not only the $k$ pairwise products of information, but also the m pairwise products of masks and the e pairwise products of $\varepsilon_x$ and $\varepsilon_y$.

Further, the refresh operation performed by the refreshing unit 106 may happen on the full codeword or selectively on the encoding of the (information, mask). This allows not altering the redundancy injected in the e elements.

Several fault detection strategies may be implemented by the checking unit 108.

For example, the randomness (independent of the sensitive information) may be fed in the e elements, and it can be checked at any point of the method implemented by the protection device 10 or the processing device 11 that the same operations have been carried out on the random elements than on the actual data. Such random elements are also referred to as 'canaries' in the security field. For example, if the processing function is related to AES, if $k = e$, one protected AES and another AES on other unrelated data can be carried out. As the end-to-end masking mangles the $k$ and $e$ elements, and error on codewords is very likely to impact the independent AES, this can be verified at the end on the ciphertext.

The e elements can also be a checksum on the masked data, which allows for fresh- ness of the canaries, though at the expense of causing more leakage if inadequately or defectively implemented.

A constant $cst$ can be injected, which waives the requirement to verify the extra AES, since the output will be the same across AES invocations.

According to another fault detection strategy, a fault detection analysis may be performed in the elementary operations like the additions and multiplications performed by the adder 104 and the multiplier 105.

For example, considering two input vectors ($x$, $m_x$, $\varepsilon_x$) and ($y$, $m_y$, $\varepsilon_y$) and the constant $cst$:

- For the addition operation performed by the adder 104, as the addition uses two input operands (even), the parameters $\varepsilon_x$ and $\varepsilon_y$ will be cancelled out if there is no fault, so that the constant $cst$ may be compensated one more time. For example, taking e = 1 for detection of a *single* uniformly distributed fault and if there is any fault that makes either $\varepsilon_x \neq cst$ or $\varepsilon_y \neq cst$, the faults can be detected at the end, with the fault coverage probability being 100% for one error indicator over $\mathbb{F}_{256}$.

- For the multiplication operation performed by the multiplier 105, after the component-wise multiplication, it comes $\varepsilon' = prod(\varepsilon_x, \varepsilon_y)$. Assuming there is no fault, then $\varepsilon'$ is component-wise square; then the inverse of $cst$ has to be multiplied for compensation. This can be achieved by performing a multiplication with empty information and mask, but with the error indicator part being inverse of $cst$. In this case, $cst$ is a nonzero element. Taking the same setting with e = 1 for detection of a *single* uniformly distributed fault, the fault coverage probability is given by:

$$100\% \times \frac{255}{256} + 0 \times \frac{1}{256} = \frac{255}{256} \text{ (The former part for } \epsilon_x \neq 0, \text{ and the later for } \epsilon_x = 0\text{)}.$$

The same reasoning holds for $\varepsilon_y$ for one error indicator over $\mathbb{F}_{256}$.

Accordingly, the fault detection capability implemented by the checking unit 108 may be mainly determined by $e$ error indicators $\varepsilon$, which typically results in high fault detection coverage in computations under mild conditions.

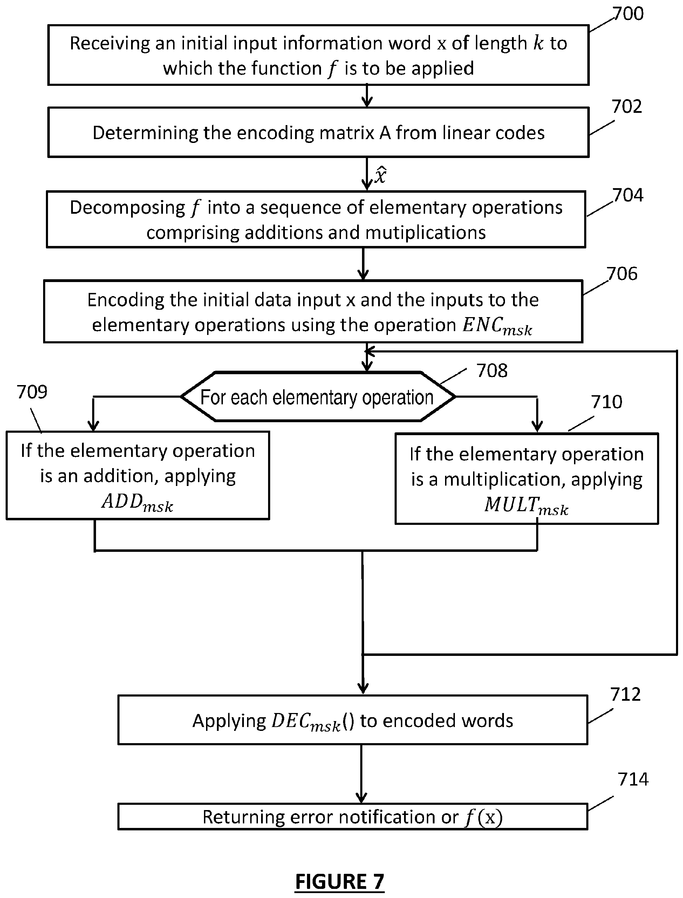

Figure 7 is a flowchart depicting the method of executing a f processing function in response to the receipt of an initial information word $x$ (also denoted $x_{in}$) comprising $k$ information symbols, according to some embodiments. The method is implemented to determine securely $f(x)$ (also denoted $f(x_{in})$).

In step 700, the initial information word $x$ (also denoted $x_{in}$) comprising $k$ information symbols are received.

In step 702, the encoding matrix $A$ is determined from an information code C and a masking code D.

In step 704, the processing function is decomposed into basis operations including one or more elementary operations and possibly one or more additional operations. The elementary operations comprise one or more elementary operations including at least a multiplication operation. The elementary operations may also comprise one or more addition operation.

It should be noted that steps 702 and 704 may be performed according to a different order (inverse order or in parallel). Further, the step 704 may be performed previously and step 704 be replaced by a step consisting in using the precomputed decomposition of the processing function into elementary operations and additional operations.

In step 706, the encoding operation $ENC_{msk}$ is applied to the initial information word $x$ (also denoted $x_{in}$) and to each input of an elementary operation resulting from the decomposition, which provides encoded variables.

In step 708, the elementary operations are executed using the variables encoded in step 706 (protected variables) instead of the corresponding original variables (unprotected variables). The elementary operations may comprise one or more additions $ADD_{msk}$ (step 709) and/or one or more multiplications $MULT_{msk}$ (step 710). In particular, the multiplication operation $MULT_{msk}$ is masked using the pseudo-inverse matrix $A^{-1}$ of said encoding matrix $A$, and the pseudo-inverse transpose matrix $A^{-T}$ of said encoding matrix $A$.

The additional operations may also be executed until all the basis operations are executed. The encoded variables may be refreshed once or at different instant times.

In step 712, in response to the computation of all basis operations, the variable encoded in step 706 or only some of them may be decoded using the decoding operation $DEC_{msk}()$.

A checking step may be implemented to detect if failure occurred in the previous computations, at different phases of the processing, and if an error is detected an error notification may be generated.

In step 714, if an error was detected, the error notification is returned. Otherwise the result of the execution function $f(x)$ (also denoted $f(x_{in})$) is returned.

The processing system may be used in various applications such as in various consumer, commercial, industrial, and infrastructure applications. The skilled person will readily understand that the invention is not limited to cryptosystems and can be applied to other processing systems 1 such as safety-critical systems (industrial systems, automotive systems, satellite systems, etc.) complying to standards such as IEC 62443, ISO 26262 & ISO/SAE 21434, etc. Those standards mandate fault detection capability, whilst at the same time ability to resist attacks, including side-channel attacks.

Embodiments of the present disclosure can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein. In particular, the methods described herein may be implemented in a computer system.

It should be noted that the functions, acts, and/or operations specified in the flow charts, sequence diagrams, and/or block diagrams may be re-ordered, processed serially, and/or processed concurrently consistent with embodiments of the disclosure. For example steps 410 and 412 may be performed according to a different order or even in parallel. Moreover, any of the flow charts, sequence diagrams, and/or block diagrams may include more or fewer blocks than those illustrated consistent with embodiments of the disclosure.

While embodiments of the disclosure have been illustrated by a description of various examples, and while these embodiments have been described in considerable detail, it is not the intent of the applicant to restrict or in any way limit the scope of the appended claims to such detail. In particular, the invention is not limited to an encoding matrix $A$ generated using a Vandermonde matrix. Indeed the encoding matrix may be generally generated from any matrix which meets a number of properties including at least security properties, the encoding matrix $A$ being generated to meet security objectives in terms of dual distance. These properties may also include a property related to a PPA metric, the encoding matrix $A$ being generated to reach a structure or a sparsity, which improves the PPA metric.

Additional advantages and modifications will readily appear to those skilled in the art. The disclosure in its broader aspects is therefore not limited to the specific details, representative methods, and illustrative examples shown and described.

## Claims

1.  A processing system (1) configured to execute a processing function $f(x)$ in response to the receipt of an input information word $x$ comprising $k$ information symbols, the processing system comprising a protection device (10) configured to protect the execution of the processing function, wherein the processing system (1) comprises a processing unit (11) configured to execute the processing function, the processing unit being configured to decompose the processing function f into one or more basis operations comprising one or more elementary operations between two operands, the elementary operations comprising at least a component-wise multiplication operation, the processing unit comprising a multiplier (105) configured to perform said multiplication operation, wherein the protection device (10) comprises at least:

    - an encoding matrix determination unit (101) configured to randomly determine an information code and a masking code being linear codes, said information code and said masking code satisfying one or more predefined code properties, and to determine the encoding matrix $A$ from the information code and the masking code, said encoding matrix $A$ being determined by vertically stacking the vectors of the information code and of the masking code;
    - an encoder (102) configured to apply an encoding operation to an encoder input comprising information symbols, said encoding operation consisting in encoding the encoder input using the encoding matrix $A$, which provides an encoded word corresponding to the encoder input;

        wherein the processing device is configured to apply said encoder to said input information word $x$, and to each operand of an elementary operation, each elementary operation being applied to the encoded words determined by the encoder (102) for each operand,
**characterized in that**
the multiplication operation performed by said multiplier (105) is further masked using the pseudo-inverse matrix A $^{-1}$ of said encoding matrix **A,** and the pseudo-inverse transpose matrix **A** $^{-T}$ of said encoding matrix A, such that $(A^T)^{-1} = (A^{-1})T$.

2. The processing system of claim 1, wherein the encoding matrix **A** is applied by the encoder (102) to pad $k$ information symbols of an encoder input with m random numbers, the output of the encoder (102) being a masked vector $\hat{x}$ of length $n$, with $n \geq k + \mathrm{m}$, the masked vector $\hat{x}$ belonging to $\mathbb{F}^n$, the encoding matrix **A** being an $(k + \mathrm{m}) \times n$ matrix in the field $\mathbb{F}$.

3. The processing system of any preceding claim, wherein in response to the receipt of an encoder input X, the encoder (102) is configured to determine random masks $M_X \in \mathbb{F}^m$ and an error indicator $\epsilon_X \in \mathbb{F}^e$ in association with the encoder input $X$, and to encode the encoder input using the encoding matrix **A,** the random masks $M_X$ and the error indicator $\varepsilon_X$.

4. The processing system of claim 3, wherein the encoder output $\hat{X}$ is determined as :

$$\hat{X} = (X, M_X, \epsilon_X)A$$

5. The processing system of any preceding claim, wherein in response to the receipt (410) of two inputs $\hat{X}$ and $\hat{Y}$ masked by the encoder (102), the multiplier (105) is configured to :

   - determine (414) the cross-product W of the masked vectors and of the random matrix as $W = \hat{X}^T\hat{Y}$;
   - apply (416) a flatten function to $A^{-T}W$ which provides a flattened matrix $T$ defined as $T = flatten\ (A^{-T}W)$, where $A^{-T}$ is the pseudo-inverse transpose matrix of the encoding matrix $A$;
   - determine (418) the result of the multiplication $\hat{Z}$ by performing the product of the flattened matrix $T$ and of an encoded matrix $\hat{S}$ such that $\hat{Z} = T\hat{S}$, $\hat{S}$ corresponding to the encoding of an original matrix by the encoder (102) $S \in \mathbb{F}^{IJ \times J}$, the matrix S being divided into $I$ sub-matrices $S_i$ into such that each sub-matrix $S_i$ has a size $J \times I$ and has only single non-zero element $(S_i)_{i,i}$, for $1 \leq i \leq I$.

6. The processing system of any preceding claim 1 to 4, wherein in response to the receipt of two inputs $\hat{X}$ and $\hat{Y}$ masked by the encoder (102), the multiplier (105) is configured to:

   - determine (503) a random seed $sd$ uniformly in $\mathbb{F}^{n^2 - n\prime}$ ;
   - determine (504), a random matrix $\hat{R}$ from the random seed;
   - determine (505) the sum W of the cross-product of the masked vectors and of the random matrix as $= \hat{X}^T\hat{Y} + \hat{R}$;
   - apply (506) a flatten function to $A^{-T}W$ which provides a flattened matrix $T$ defined as $T = flatten\ (A^{-T}W)$, where $A^{-T}$ is the pseudo-inverse transpose matrix of the encoding matrix $A$;
   - determine the result of the multiplication $\hat{Z}$ by performing the product of the flattened matrix $T$ and of an encoded matrix $\hat{S}$ such that $\hat{Z} = TS$, $\hat{S}$ corresponding to the encoding of an original matrix by the encoder (102) $S \in \mathbb{F}^{IJ \times J}$, the matrix S being divided into $I$ sub-matrices $S_i$ into such that each sub-matrix $S_i$ has a size $J \times I$ and has only single non-zero element $(S_i)_{i,i}$, for $1 \leq i \leq I$.

7. The processing system of any preceding claim, wherein said elementary operations further comprise a component-wise addition operation and the processing device comprises an adder (104) configured to perform said addition operation using inputs previously encoded by the encoder (102).

8. The processing system of any preceding claim, wherein the protection device further comprise a decoder (110) configured to apply a decoding operation to word $\hat{X}$ previously encoded by the encoder (102), the decoder (110) being configured to provide a decoder output comprising original data X, using the encoded word $\hat{X}$ and the pseudo-inverse matrix $A^{-1}$ of the encoder matrix A.

9. The processing system of claims 3 and 8, wherein the decoder output further comprises random masks $\mathbf{M_X} \in \mathbb{F}^m$ and an error indicator $\epsilon_X \in \mathbb{F}^e$ in association with the output original data $X$, and the decoding operation $DEC_{msk}$ applied by the decoder (102) is defined by:

$$DEC_{msk}(\hat{X}) = \hat{X}A^{-1} = (X, \boldsymbol{M_X}, \epsilon_X)$$

10. The processing system of any preceding claim, wherein the protection device (10) further comprise a refreshing unit (106) configured to perform a refreshing operation, at one or more instant times during the execution of the processing function, said refreshing operation consisting in determining a refreshed encoded word $\hat{X}'$ for an encoder input word $X$ previously applied to the decoder to determine encoded word $\hat{X}$ such that both encoded word $\hat{X}$ and the refreshed encoded word $\hat{X}'$ correspond to the same input information word $X$, the refreshing unit (106) being configured to replace the encoded word $\hat{X}$ by the refreshed encoded word $\hat{X}'$.

11. The processing system of any preceding claim, wherein the protection device (10) further comprises a checking unit (108) configured to perform a checking operation consisting in checking if a computing error occurred in the operations performed by the encoder (102), the adder (104), or the multiplier (105).

12. The processing system of claims 3 and 11, wherein the checking unit (108) is configured to check (603) whether the error indicator variable $\epsilon_X$ associated with the word $X$ meets the condition $\epsilon_X$ = cst where cst is a predefined constant, and detect whether an error occurred from said condition.

13. The processing system of claim 12, wherein no error is detected if $\epsilon_X$ = cst (604, 605), and if the error indicator variable $\epsilon_X$ is different from the predefined constant cst, the checking unit is configured to further apply a syndrome decoding technique using syndromes of linear codes to determine if an error occurred.

14. The processing system of any preceding claim, wherein the encoding matrix A is generated from a Vandermonde matrix.

15. A method, implemented in a processing system (1), for executing a processing function $f(x)$ in response to the receipt of an input information word $x$ comprising $k$ information symbols,, the method comprising protecting the execution of the processing function, wherein the execution of the processing function comprises decomposing the processing function $f$ into one or more basis operations comprising one or more elementary operations between two operands, the elementary operations comprising at least a multiplication operation, the multiplication being a component-wise multiplication, the processing function execution step comprising :

   - randomly determining an information code and a masking code, being linear codes, said information code and said masking code satisfying one or more predefined code properties,
   - determining an encoding matrix A from the information code and the masking code, said matrix A being determined by vertically stacking the vectors of the information code and of the masking code;
   - applying an encoding operation to the input information word $x$, and to each operand of an elementary operation, prior the execution of the elementary operation, said encoding operation consisting in encoding the input received in the encoding step using the encoding matrix A;
   - executing the one or more elementary operations by applying an elementary operation to the operands encoded in the encoding step;

   wherein the multiplication operation is further masked using the pseudo-inverse matrix $\mathbf{A}^{-1}$ of said encoding matrix $\mathbf{A}$, and the pseudo-inverse transpose matrix $\mathbf{A}^{-T}$ of said encoding matrix $\mathbf{A}$.

**Patentansprüche**

1. Verarbeitungssystem (1), das konfiguriert ist, um eine Verarbeitungsfunktion $f(x)$ als Reaktion auf den Empfang eines Eingabeinformationswortes $x$ umfassend $k$ Informationssymbole auszuführen, wobei das Verarbeitungssystem eine Schutzvorrichtung (10) umfasst, die zum Schützen der Ausführung der Verarbeitungsfunktion konfiguriert ist, wobei das Verarbeitungssystem (1) eine Verarbeitungseinheit (11) umfasst, die konfiguriert ist, um die Verarbeitungsfunktion auszuführen, wobei die Verarbeitungseinheit konfiguriert ist, um die Verarbeitungsfunktion $f$ in eine oder mehrere Basisoperationen zu zerlegen, die eine oder mehrere elementare Operationen zwischen zwei Operanden umfassen, wobei die elementaren Operationen mindestens eine komponentenweise Multiplikationsoperation umfassen, wobei die Verarbeitungseinheit einen Multiplizierer (105) umfasst, der konfiguriert ist, um die Multiplikationsoperation durchzuführen, wobei die Schutzvorrichtung (10) mindestens umfasst:

- eine Codierungsmatrix-Bestimmungseinheit (101), die konfiguriert ist, um zufällig einen Informationscode und einen Maskierungscode als lineare Codes zu bestimmen, wobei der Informationscode und der Maskierungscode eine oder mehrere vordefinierte Codeeigenschaften erfüllen, und die Codierungsmatrix *A* aus dem Informationscode und dem Maskierungscode zu bestimmen, wobei die Codierungsmatrix *A* durch vertikales Stapeln der Vektoren des Informationscodes und des Maskierungscodes bestimmt wird;
- einen Codierer (102), der konfiguriert ist, um eine Codierungsoperation auf einen Codierer-Eingang anzuwenden, der Informationssymbole umfasst, wobei die Codierungsoperation darin besteht, den Codierer-Eingang unter Verwendung der Codierungsmatrix Azu codieren, die ein dem Codierer-Eingang entsprechendes codiertes Wort bereitstellt;

wobei die Verarbeitungsvorrichtung konfiguriert ist, um den Codierer auf das Eingabeinformationswort *x*und auf jeden Operanden einer elementaren Operation anzuwenden, wobei jede elementare Operation auf die vom Codierer (102) für jeden Operanden bestimmten codierten Wörter angewendet wird, **dadurch gekennzeichnet, dass** die Multiplikationsoperation, die von dem Multiplizierer (105) durchgeführt wird, weiter unter Verwendung der pseudoinversen Matrix $A^{-1}$ der Codierungsmatrix *A* und der pseudoinversen Transpositionsmatrix $A^{-T}$ der Codierungsmatrix *A*maskiert, sodass $(A^T)^{-1} = (A^{-1})^T$.

2. Verarbeitungssystem nach Anspruch 1, wobei die Codierungsmatrix *A* vom Codierer (102) angewendet wird, um *k* Informationssymbole eines Codierereingangs mit m Zufallszahlen aufzufüllen, wobei der Ausgang des Codierers (102) ein maskierter Vektor $\hat{x}$ einer Länge *n* ist, wobei $n \geq k + m$, der maskierte Vektor $\hat{x}$ $\mathbb{F}^n$ angehört, wobei die Codierungsmatrix *A* eine $(k + m) \times n$ Matrix im Feld $\mathbb{F}$ ist.

3. Verarbeitungssystem nach einem vorstehenden Anspruch, wobei der Codierer (102) als Reaktion auf den Empfang eines Codierereingangs *X* konfiguriert ist, um Zufallsmasken $M_X \in \mathbb{F}^m$ und einen Fehlerindikator $\epsilon_X \in \mathbb{F}^e$ in Verbindung mit dem Codierereingang *X* zu bestimmen, und um den Codierereingang unter Verwendung der Codierungsmatrix *A*, der Zufallsmasken $M_X$ und des Fehlerindikators $\epsilon_X$ zu codieren.

4. Verarbeitungssystem nach Anspruch 3, wobei der Codiererausgang $\hat{X}$ bestimmt wird als:

$$\bar{X} = (X, M_X, \epsilon_X)A$$

5. Verarbeitungssystem nach einem vorstehenden Anspruch, wobei als Reaktion auf den Empfang (410) von zwei durch den Codierer (102) maskierten Eingängen $\hat{X}$ und $\hat{Y}$ der Multiplizierer (105) konfiguriert ist, um:

- das Kreuzprodukt W der maskierten Vektoren und der Zufallsmatrix als $W = \hat{X}^T \hat{Y}$ zu bestimmen (414);
- eine Abflachungsfunktion auf $A^{-T}W$ anzuwenden (416), die eine abgeflachte Matrix *T*bereitstellt, die als $T = $ flach $(A^{-T}W)$ definiert ist, wobei $A^{-T}$ die pseudoinverse Transpositionsmatrix der Codierungsmatrix *A* ist;
- das Ergebnis der Multiplikation $\hat{Z}$ durch Durchführen des Produkts der abgeflachten Matrix *T* und einer codierten Matrix $\hat{S}$ zu bestimmen (418), sodass $\hat{Z} = T\hat{S}$, $\hat{S}$ der Codierung einer ursprünglichen Matrix durch den Codierer (102) $S \in \mathbb{F}^{IJ \times J}$ entspricht, wobei die Matrix S in *I* Teilmatrizen $S_i$ unterteilt wird, sodass jede Teilmatrix $S_i$ eine Größe $J \times I$ aufweist und nur ein einziges von Null verschiedenes Element $(S_i)_{i,i}$ für $1 \leq i \leq I$ aufweist.

6. Verarbeitungssystem nach einem vorstehenden Anspruch 1 bis 4, wobei als Reaktion auf den Empfang von zwei durch den Codierer (102) maskierten Eingängen $\hat{X}$ und $\hat{Y}$ der Multiplizierer (105) konfiguriert ist, um:

- eine Zufallsverteilung *sd* gleichförmig in $\mathbb{F}^{n^2-n'}$ zu bestimmen (503);
- eine Zufallsmatrix $\hat{R}$ aus der Zufallsverteilung zu bestimmen (504);
- die Summe W des Kreuzprodukts der maskierten Vektoren und der Zufallsmatrix als $= \hat{X}^T \hat{Y} + \hat{R}$ zu bestimmen

(505);

- eine Abflachungsfunktion auf $\boldsymbol{A^{-T}W}$ anzuwenden (506), die eine abgeflachte Matrix $T$ bereitstellt, die als $T = flach$ ($\boldsymbol{A^{-T}W}$) definiert ist, wobei $\boldsymbol{A^{-T}}$ die pseudoinverse Transpositionsmatrix der Codierungsmatrix $A$ ist;

- das Ergebnis der Multiplikation $\hat{Z}$ durch Durchführen des Produkts der abgeflachten Matrix $T$ und einer codierten Matrix $\hat{S}$ zu bestimmen, sodass $\hat{Z} = T\hat{S}$, $\hat{S}$ der Codierung einer ursprünglichen Matrix durch den Codierer (102) $S \in \mathbb{F}^{IJ \times J}$ entspricht, wobei die Matrix $S$ in $I$ Teilmatrizen $S_i$ unterteilt wird, sodass jede Teilmatrix $S_i$ eine Größe $J \times I$ aufweist und nur ein einziges von Null verschiedenes Element $(S_i)_{i,i}$ für $1 \le i \le I$ aufweist.

7. Verarbeitungssystem nach einem vorstehenden Anspruch, wobei die elementaren Operationen weiter eine komponentenweise Additionsoperation umfassen und die Verarbeitungsvorrichtung einen Addierer (104) umfasst, der konfiguriert ist, um die Additionsoperation unter Verwendung von Eingaben durchzuführen, die zuvor vom Codierer (102) codiert worden sind.

8. Verarbeitungssystem nach einem vorstehenden Anspruch, wobei die Schutzvorrichtung weiter einen Decodierer (110) umfasst, der konfiguriert ist, um eine Decodierungsoperation auf das zuvor vom Codierer (102) codierte Wort $\hat{X}$ anzuwenden, wobei der Decodierer (110) konfiguriert ist, um einen Decodiererausgang, der die Originaldaten $X$ umfasst, unter Verwendung des codierten Wortes $\hat{X}$ und der pseudoinversen Matrix $\boldsymbol{A^{-1}}$ der Codierermatrix $\boldsymbol{A}$ bereitzustellen.

9. Verarbeitungssystem nach den Ansprüchen 3 und 8, wobei der Decodiererausgang weiter Zufallsmasken $\mathbf{M_X} \in \mathbb{F}^m$ und einen Fehlerindikator $\epsilon_X \in \mathbb{F}^e$ in Verbindung mit den ursprünglichen Ausgabedaten $X$ umfasst und die vom Decodierer (102) angewandte Decodierungsoperation $DEC_{msk}$ definiert ist durch:

$$DEC_{msk}(\hat{X}) = \hat{X}\boldsymbol{A^{-1}} = (X, \boldsymbol{M}_X, \epsilon_X)$$

10. Verarbeitungssystem nach einem vorstehenden Anspruch, wobei die Schutzvorrichtung (10) weiter eine Auffrischungseinheit (106) umfasst, die konfiguriert ist, um beim Ausführen der Verarbeitungsfunktion zu einem oder mehreren Zeitpunkten eine Auffrischungsoperation durchzuführen, wobei die Auffrischungsoperation aus dem Bestimmen eines aufgefrischten codierten Wortes $\hat{X}'$ für ein Codierereingabewort $X$ besteht, das zuvor auf den Decodierer angewendet wird, um ein codiertes Wort $\hat{X}$ zu bestimmen, sodass sowohl das codierte Wort $\hat{X}$ als auch das aufgefrischte codierte Wort $\hat{X}'$ demselben Eingabeinformationswort $X$ entsprechen, wobei die Auffrischungseinheit (106) konfiguriert ist, um das codierte Wort $\hat{X}$ durch das aufgefrischte codierte Wort X' zu ersetzen.

11. Verarbeitungssystem nach einem vorstehenden Anspruch, wobei die Schutzvorrichtung (10) weiter eine Prüfeinheit (108) umfasst, die konfiguriert ist, um eine Prüfoperation durchzuführen, die aus dem Prüfen besteht, ob bei den vom Codierer (102), dem Addierer (104) oder dem Multiplizierer (105) durchgeführten Operationen ein Rechenfehler aufgetreten ist.

12. Verarbeitungssystem nach den Ansprüchen 3 und 11, wobei die Prüfeinheit (108) konfiguriert ist, um zu prüfen (603), ob die dem Wort $X$ zugeordnete Fehlerindikatorvariable $\varepsilon_X$ die Bedingung $\varepsilon_X = cst$ erfüllt, wobei cst eine vordefinierte Konstante ist, und zu erkennen, ob aus dieser Bedingung ein Fehler aufgetreten ist.

13. Verarbeitungssystem nach Anspruch 12, wobei kein Fehler erkannt wird, wenn $\varepsilon_X = cst(604,605)$, und wenn sich die Fehlerindikatorvariable $\varepsilon_X$ von der vordefinierten Konstanten cst unterscheidet, die Prüfeinheit konfiguriert ist, um eine Syndrom-Decodierungstechnik unter Verwendung von Syndromen linearer Codes anzuwenden, um zu bestimmen, ob ein Fehler aufgetreten ist.

14. Verarbeitungssystem nach einem vorstehenden Anspruch, wobei die Codierungsmatrix $\boldsymbol{A}$ aus einer Vandermonde-Matrix generiert wird.

15. Verfahren, das in einem Verarbeitungssystem (1) zum Ausführen einer Verarbeitungsfunktion $f(x)$ als Reaktion auf den Empfang eines Eingabeinformationswortes $x$ umfassend $k$ Informationssymbolen implementiert wird, wobei das Verfahren Schützen der Ausführung der Verarbeitungsfunktion umfasst, wobei die Ausführung der Verarbeitungsfunktion die Zerlegung der Verarbeitungsfunktion $f$ in eine oder mehrere Basisoperationen umfasst, die eine oder mehrere elementare Operationen zwischen zwei Operanden umfassen, wobei die elementaren Operationen mindestens eine Multiplikationsoperation umfassen, wobei die Multiplikation eine komponentenweise Multiplikation ist, wobei der Ausführungsschritt der Verarbeitungsfunktion umfasst:

- zufälliges Bestimmen eines Informationscodes und eines Maskierungscodes, die lineare Codes sind, wobei der Informationscode und der Maskierungscode eine oder mehrere vordefinierte Codeeigenschaften erfüllen,
- Bestimmen einer Codierungsmatrix **A** aus dem Informationscode und dem Maskierungscode, wobei die Matrix **A** durch vertikales Stapeln der Vektoren des Informationscodes und des Maskierungscodes bestimmt wird;
- Anwenden einer Codierungsoperation auf das Eingabeinformationswort x und auf jeden Operanden einer elementaren Operation vor der Ausführung der elementaren Operation, wobei die Codierungsoperation im Codieren der im Codierungsschritt empfangenen Eingabe unter Verwendung der Codierungsmatrix A besteht;
- Ausführen der einen oder mehrerer elementarer Operationen durch Anwenden einer elementaren Operation auf die im Codierungsschritt Codierten Operanden;

wobei die Multiplikationsoperation weiter unter Verwendung der pseudoinversen Matrix **A$^{-1}$** der Codierungsmatrix **A** und der pseudoinversen Transpositionsmatrix **A$^{-T}$** der Codierungsmatrix **A** maskiert wird.

## Revendications

1. Système de traitement (1) configuré pour exécuter une fonction de traitement f(x) en réponse à la réception d'un mot d'information d'entrée x comprenant des symboles d'information k, le système de traitement comprenant un dispositif de protection (10) configuré pour protéger l'exécution de la fonction de traitement, dans lequel le système de traitement (1) comprend une unité de traitement (11) configurée pour exécuter la fonction de traitement, l'unité de traitement étant configurée pour décomposer la fonction de traitement f en une ou plusieurs opérations de base comprenant une ou plusieurs opérations élémentaires entre deux opérandes, les opérations élémentaires comprenant au moins une opération de multiplication par composante, l'unité de traitement comprenant un multiplicateur (105) configuré pour réaliser ladite opération de multiplication, dans lequel le dispositif de protection (10) comprend au moins :

   - une unité de détermination de matrice de codage (101) configurée pour déterminer aléatoirement un code d'information et un code de masquage étant des codes linéaires, ledit code d'information et ledit code de masquage satisfaisant une ou plusieurs propriétés de code prédéfinies, et pour déterminer la matrice de codage **A** à partir du code d'information et du code de masquage, ladite matrice de codage **A** étant déterminée en empilant verticalement les vecteurs du code d'information et du code de masquage ;
   - un codeur (102) configuré pour appliquer une opération de codage à une entrée de codeur comprenant des symboles d'information, ladite opération de codage consistant à coder l'entrée de codeur en utilisant la matrice de codage **A,** qui fournit un mot codé correspondant à l'entrée de codeur ;

      dans lequel le dispositif de traitement est configuré pour appliquer ledit codeur audit mot d'information d'entrée x, et à chaque opérande d'une opération élémentaire, chaque opération élémentaire étant appliquée aux mots codés déterminés par le codeur (102) pour chaque opérande,
      **caractérisé en ce que**
      l'opération de multiplication réalisée par ledit multiplicateur (105) est en outre masquée en utilisant la matrice pseudo-inverse **A$^{-1}$** de ladite matrice de codage **A**, et de la matrice transposée pseudo-inverse **A$^{-T}$** de ladite matrice de codage A, de sorte que $(A^{T})^{-1} = (A^{-1})^{T}$.

2. Système de traitement selon la revendication 1, dans lequel la matrice de codage **A** est appliquée par le codeur (102) pour compléter k symboles d'information d'une entrée de codeur avec m nombres aléatoires, la sortie du codeur (102) étant un vecteur masqué $\hat{x}$ de longueur n, avec $n \ge k + m$, le vecteur masqué $\hat{x}$ appartenant à $\mathbb{F}^{n}$, la matrice de codage **A** étant une matrice $(k + m) \times n$ dans le champ $\mathbb{F}$.

3. Système de traitement selon une quelconque revendication précédente, dans lequel, en réponse à la réception d'une entrée de codeur X, le codeur (102) est configuré pour déterminer des masques aléatoires $\mathbf{M_X} \in \mathbb{F}^m$ et un indicateur d'erreur $\epsilon_X \in \mathbb{F}^e$ en association avec l'entrée de codeur X, et pour coder l'entrée de codeur en utilisant la matrice de codage **A,** les masques aléatoires $M_X$ et l'indicateur d'erreur $\varepsilon_X$.

4. Système de traitement selon la revendication 3, dans lequel la sortie de codeur $\hat{X}$ est déterminée comme :

$$\hat{X} = (X, \boldsymbol{M}_X, \epsilon_X)\boldsymbol{A}$$

**5.** Système de traitement selon une quelconque revendication précédente, dans lequel, en réponse à la réception (410) de deux entrées $\hat{X}$ et $\hat{Y}$ masquées par le codeur (102), le multiplicateur (105) est configuré pour :

- déterminer (414) le produit vectoriel W des vecteurs masqués et de la matrice aléatoire comme $W = \hat{X}^T\hat{Y}$;
- appliquer (416) une fonction d'aplatissement à $\boldsymbol{A}^{-T}\boldsymbol{W}$ qui fournit une matrice aplatie $T$ définie comme $T = $ flatten $(\boldsymbol{A}^{-T}\boldsymbol{W})$, où $\boldsymbol{A}^{-T}$ est la matrice transposée pseudo-inverse de la matrice de codage $A$;
- déterminer (418) le résultat de la multiplication $\hat{Z}$ en réalisant le produit de la matrice aplatie $T$ et d'une matrice codée $\hat{S}$ telle que $\hat{Z} = $ TS, S correspondant au codage d'une matrice d'origine par le codeur (102) $S \in \mathbb{F}^{IJ \times J}$, la matrice S étant divisée en $I$ sous-matrices $S_i$ de sorte que chaque sous-matrice $S_i$ présente une taille $J \times I$ et présente un seul élément non nul $(S_i)_{i,i}$, pour $1 \leq i \leq I$.

**6.** Système de traitement selon une quelconque revendication précédente 1 à 4, dans lequel, en réponse à la réception de deux entrées $\hat{X}$ et $\hat{Y}$ masquées par le codeur (102), le multiplicateur (105) est configuré pour :

- déterminer (503) une graine aléatoire $sd$ uniformément dans $\mathbb{F}^{n^2 - n'}$ ;
- déterminer (504) une matrice aléatoire $\hat{R}$ à partir de la graine aléatoire ;
- déterminer (505) la somme W du produit vectoriel des vecteurs masqués et de la matrice aléatoire comme $= \hat{X}^T\hat{Y} + \hat{R}$ ;
- appliquer (506) une fonction d'aplatissement à $\boldsymbol{A}^{-T}\boldsymbol{W}$ qui fournit une matrice aplatie $T$ définie comme $T = $ *flatten* $(\boldsymbol{A}^{-T}\boldsymbol{W})$, où $\boldsymbol{A}^{-T}$ est la matrice transposée pseudo-inverse de la matrice de codage $A$ ;
- déterminer le résultat de la multiplication $\hat{Z}$ en réalisant le produit de la matrice aplatie $T$ et d'une matrice codée $\hat{S}$ telle que $\hat{Z} = T\hat{S}$, $\hat{S}$ correspondant au codage d'une matrice d'origine par le codeur (102) $S \in \mathbb{F}^{IJ \times J}$, la matrice S étant divisée en $I$ sous-matrices $S_i$ de sorte que chaque sous-matrice $S_i$ présente une taille $J \times I$ et présente un seul élément non nul $(S_i)_{i,i}$, pour $1 \leq i \leq I$.

**7.** Système de traitement selon une quelconque revendication précédente, dans lequel lesdites opérations élémentaires comprennent en outre une opération d'addition par composante et le dispositif de traitement comprend un additionneur (104) configuré pour réaliser ladite opération d'addition en utilisant des entrées préalablement codées par le codeur (102).

**8.** Système de traitement selon une quelconque revendication précédente, dans lequel le dispositif de protection comprend en outre un décodeur (110) configuré pour appliquer une opération de décodage à un mot $\hat{X}$ préalablement codé par le codeur (102), le décodeur (110) étant configuré pour fournir une sortie de décodeur comprenant des données originales $X$, en utilisant le mot codé $\hat{X}$ et la matrice pseudo-inverse $\boldsymbol{A}^{-1}$ de la matrice de codeur $\boldsymbol{A}$.

**9.** Système de traitement selon les revendications 3 et 8, dans lequel la sortie de décodeur comprend en outre des masques aléatoires $\boldsymbol{M}_X \in \mathbb{F}^m$ et un indicateur d'erreur $\epsilon_X \in \mathbb{F}^e$ en association avec les données originales de sortie X, et l'opération de décodage $DEC_{msk}$ appliquée par le décodeur (102) est définie par :

$$DEC_{msk}(\hat{X}) = \hat{X}\boldsymbol{A}^{-1} = (X, \boldsymbol{M}_X, \epsilon_X)$$

**10.** Système de traitement selon une quelconque revendication précédente, dans lequel le dispositif de protection (10) comprend en outre une unité de rafraîchissement (106) configurée pour réaliser une opération de rafraîchissement, à un ou plusieurs instants pendant l'exécution de la fonction de traitement, ladite opération de rafraîchissement consistant à déterminer un mot codé rafraîchi $\hat{X}$ pour un mot d'entrée de codeur $X$ précédemment appliqué au décodeur pour déterminer le mot codé $\hat{X}$, de sorte que le mot codé $\hat{X}$ et le mot codé rafraîchi $\hat{X}'$ correspondent tous deux au même mot d'information d'entrée X, l'unité de rafraîchissement (106) étant configurée pour remplacer le mot codé $\hat{X}$ par le mot codé rafraîchi $\hat{X}'$.

**11.** Système de traitement selon une quelconque revendication précédente, dans lequel le dispositif de protection (10) comprend en outre une unité de vérification (108) configurée pour réaliser une opération de vérification consistant à vérifier si une erreur de calcul s'est produite dans les opérations réalisées par le codeur (102), l'additionneur (104) ou le multiplicateur (105).

**12.** Système de traitement selon les revendications 3 et 11, dans lequel l'unité de vérification (108) est configurée pour vérifier (603) si la variable d'indicateur d'erreur $\varepsilon_X$ associée au mot $X$ satisfait la condition $\varepsilon_X$ = cst où cst est une constante prédéfinie, et pour détecter si une erreur s'est produite à partir de ladite condition.

**13.** Système de traitement selon la revendication 12, dans lequel aucune erreur n'est détectée si $\varepsilon_X$ = cst(604,605), et si la variable d'indicateur d'erreur $\varepsilon_X$ est différente de la constante prédéfinie cst, l'unité de vérification est configurée pour appliquer en outre une technique de décodage par syndrome utilisant des syndromes de codes linéaires pour déterminer si une erreur s'est produite.

**14.** Système de traitement selon une quelconque revendication précédente, dans lequel la matrice de codage **A** est générée à partir d'une matrice de Vandermonde.

**15.** Procédé, mis en œuvre dans un système de traitement (1), destiné à exécuter une fonction de traitement $f(x)$ en réponse à la réception d'un mot d'information d'entrée $x$ comprenant $k$ symboles d'information, le procédé comprenant la protection de l'exécution de la fonction de traitement, dans lequel l'exécution de la fonction de traitement comprend la décomposition de la fonction de traitement $f$ en une ou plusieurs opérations de base comprenant une ou plusieurs opérations élémentaires entre deux opérandes, les opérations élémentaires comprenant au moins une opération de multiplication, la multiplication étant une multiplication par composante, l'étape d'exécution de fonction de traitement comprenant :

- la détermination aléatoire d'un code d'information et d'un code de masquage, étant des codes linéaires, ledit code d'information et ledit code de masquage satisfaisant à une ou plusieurs propriétés de code prédéfinies,
- la détermination d'une matrice de codage **A** à partir du code d'information et du code de masquage, ladite matrice **A** étant déterminée en empilant verticalement les vecteurs du code d'information et du code de masquage ;
- l'application d'une opération de codage au mot d'information d'entrée x, et à chaque opérande d'une opération élémentaire, avant l'exécution de l'opération élémentaire, ladite opération de codage consistant à coder l'entrée reçue à l'étape de codage en utilisant la matrice de codage A ;
- l'exécution de l'une ou des plusieurs opérations élémentaires en appliquant une opération élémentaire aux opérandes codés lors de l'étape de codage ;

dans lequel l'opération de multiplication est en outre masquée en utilisant la matrice pseudo-inverse **A$^{-1}$** de ladite matrice de codage **A**, et de la matrice transposée pseudo-inverse **A$^{-T}$** de ladite matrice de codage **A**.

**100**

PROCESSING SYSTEM (1)

| Protection Device (10) | Processing device (11) |

$x$

$f(x)$

**FIGURE 1**

10          <u>1</u>          11

Encoding matrix détermination unit (101)

REFRESHING UNIT (106)

ADDER (104)

MULTIPLIER (105)

ENCODER (102)

DECODER (110)

CHECKING UNIT (108)

**FIGURE 2**

Receiving an input information word $X$ — 300

Determining $M_X$ and $\epsilon_X$ — 301

Receiving the generated encoding matrix $A$ — 302

Determining the masked vector $\hat{X}$ by multiplying $(X, M_X, \epsilon_X)$ by $A$ — 303

Returning $\hat{X}$ — 304

**FIGURE 3**

Receiving two masked variables $\hat{X}$ and $\hat{Y}$ — 410

Retrieving the *pseudo-inverse matrix* $A^{-1}$, the pseudo-inverse transpose matrix $A^{-T}$ of $A$ and the matrix $\hat{S}$ — 412

Determining the cross-product $W$ of the masked vectors such that $W = \hat{X}^T \hat{Y}$ — 414

Determining $T$ by $T = flatten\ (A^{-T}W)$ — 416

Determining the result of the protected multiplication $\hat{Z}$ as $\hat{Z} = T\hat{S}$. — 418

Returning the result $\hat{Z}$ — 419

**FIGURE 4**

**FIGURE 5**

```
                                                                  600
┌─────────────────────────────────────────────────────────┐
│         Receiving a masked variable $\hat{X}$ and $cst$    │
└─────────────────────────────────────────────────────────┘
                            │
                            ▼
                                                                  602
┌─────────────────────────────────────────────────────────┐
│            Applying $\mathrm{DEC}_{\mathrm{msk}}(\hat{X})$ │
└─────────────────────────────────────────────────────────┘
                            │
                            ▼
                                              603
        yes    ╱─────────────────────────╲          No
     ◄─────────   $\epsilon_X = cst$ ?    ─────────►
               ╲─────────────────────────╱
         │                                           │
         ▼                                           ▼           606
┌──────────────────────┐  605          ┌──────────────────────┐
│   No error detected  │               │   Determine if error │
└──────────────────────┘               │        occurred      │
                                       └──────────────────────┘
                                                   │             607
                                                   ▼
                              yes     ╱───────────────────────╲
                          ◄───────────   Error occurred?       
                                      ╲───────────────────────╱
                    608                            │
         ▼                                         No
┌──────────────────────┐                          │
│    Notifying error   │                          ▼            609
└──────────────────────┘               ┌──────────────────────┐
                                       │      No error        │
                                       │      detected        │
                                       └──────────────────────┘
```

**FIGURE 6**

700

Receiving an initial input information word x of length $k$ to which the function $f$ is to be applied

702

Determining the encoding matrix A from linear codes

$\hat{x}$

704

Decomposing $f$ into a sequence of elementary operations comprising additions and mutiplications

706

Encoding the initial data input x and the inputs to the elementary operations using the operation $ENC_{msk}$

708

For each elementary operation

709

If the elementary operation is an addition, applying $ADD_{msk}$

710

If the elementary operation is a multiplication, applying $MULT_{msk}$

712

Applying $DEC_{msk}()$ to encoded words

714

Returning error notification or $f(\text{x})$

**FIGURE 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114048472 A1

**Non-patent literature cited in the description**

- **STEFAN MANGARD** ; **ELISABETH OSWALD** ; **THOMAS POPP**. Power Analysis Attacks: Revealing the Secrets of Smart Cards. Springer, December 2006
- **WEI CHENG** ; **SYLVAIN GUILLEY** ; **CLAUDE CARLET** ; **JEAN-LUC DANGER** ; **SIHEM MESNAGER**. Information Leakages in Code-based Masking: A Unified Quantification Approach. *IACR Trans. Cryptogr. Hardw. Embed. Syst*, 2021, vol. 2021 (3), 465-495
- **WEI CHENG** ; **SYLVAIN GUILLEY** ; **CLAUDE CARLET** ; **SIHEM MESNAGER** ; **JEAN-LUC DANGER**. Optimizing Inner Product Masking Scheme by a Coding Theory Approach. *IEEE Trans. Inf. Forensics Secur.*, 2021, vol. 16, 220-235